(19) Europäisches Patentamt
European Patent Office
Office européen des brevets

(11) **EP 2 945 834 B1**

(12) **EUROPÄISCHE PATENTSCHRIFT**

(45) Veröffentlichungstag und Bekanntmachung des Hinweises auf die Patenterteilung:
**25.05.2016 Patentblatt 2016/21**

(21) Anmeldenummer: **14767146.5**

(22) Anmeldetag: **11.09.2014**

(51) Int Cl.:
***B62D 7/09*** *(2006.01)*    ***B62D 13/04*** *(2006.01)*

(86) Internationale Anmeldenummer:
**PCT/IB2014/064414**

(87) Internationale Veröffentlichungsnummer:
**WO 2015/036945 (19.03.2015 Gazette 2015/11)**

(54) **LENKVORRICHTUNG SOWIE FAHRZEUG MIT EINER SOLCHEN**

STEERING DEVICE AND VEHICLE HAVING SUCH A STEERING DEVICE

SYSTÈME DE DIRECTION ET VÉHICULE ÉQUIPÉ DE CE SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2013 DE 102013110134**

(43) Veröffentlichungstag der Anmeldung:
**25.11.2015 Patentblatt 2015/48**

(73) Patentinhaber: **Blickle Räder + Rollen GmbH & Co.KG**
**72348 Rosenfeld (DE)**

(72) Erfinder: **HÖLLE, Rolf**
**72348 Rosenfeld (DE)**

(74) Vertreter: **Holzwarth-Rochford, Andreas**
**Jones Day**
**Nextower**
**Thurn-und-Taxis-Platz 6**
**60313 Frankfurt am Main (DE)**

(56) Entgegenhaltungen:
**US-A1- 2009 241 708**

EP 2 945 834 B1

**Beschreibung**

Die vorliegende Erfindung betrifft eine Lenkvorrichtung für ein Fahrzeug, insbesondere einen Transportwagen, umfassend zumindest ein Lenkorgan und eine Übertragungseinrichtung zur Übertragung einer Lenkbewegung des Lenkorgans auf zumindest ein erstes Rad, wobei das erste Rad um zumindest eine erste Lenkachse drehbar und um zumindest eine erste, zu der ersten Lenkachse senkrecht verlaufende erste Rotationsachse rotierbar gelagert ist und die Übertragungseinrichtung zumindest ein mit dem Lenkorgan in mechanischer Wirkverbindung stehendes und zumindest eine Unrundverzahnung aufweisendes erstes erstes Zahnrad und zumindest ein mit dem ersten Rad in mechanischer Wirkverbindung stehendes erstes zweites Zahnrad, das eine zur Unrundverzahnung des ersten ersten Zahnrades komplementäre Unrundverzahnung umfasst, aufweist, wobei eine Bewegung des Lenkorgans aus einer einer Geradeausfahrt des Fahrzeugs entsprechenden Position in eine einer Kurvenfahrt des Fahrzeugs in Richtung eines ersten Winkels entsprechenden Position zu einer Drehung des ersten Rades um die erste Lenkachse um einen ersten zweiten Winkel aus einer der Geradausfahrt des Fahrzeugs entsprechenden Position des ersten Rades führt, sowie ein Fahrzeug umfassend eine solche Lenkvorrichtung.

Aus dem Stand der Technik sind verschiedene Lenkvorrichtungen für Fahrzeuge bekannt. So offenbart bspw. die EP 2 384 950 A2 einen Transportwagen mit einer Lenkvorrichtung. Bei diesem Transportwagen wird vorgeschlagen, dass eine Drehbewegung einer Deichsel über eine Kette und Umlenkgetriebe übertragen wird, so dass vier zwangsgelenkte Lenkrollen in einem Winkelbereich von 0 - 90° gedreht werden können. Es wird vorgeschlagen, dass jeweilige Kettenräder als exzentrische Kettenräder ausgebildet werden, um zu erreichen, dass sich die jeweiligen Rollachsen der zwangsgelenkten Lenkrollen während der gesamten Drehbewegung in einem gemeinsamen Schnittpunkt schneiden, um eine saubere Kurvenfahrt zu ermöglichen. Obwohl sich dieser Transportwagen grundsätzlich bewährt hat, hat sich jedoch gezeigt, dass durch die Verwendung exzentrischer Kettenräder nicht ausreichend sichergestellt werden kann, dass über einen weiten Schwenkbereich der Lenkrollen ein gemeinsamer Schnittpunkt der Rollachsen vorhanden ist und so ein Radieren in ausreichendem Umfang vermieden wird.

Ferner offenbart die EP 0 794 104 A2 ein elektrisches Motorfahrzeug, welches eine Lenkvorrichtung umfasst. Es wird vorgeschlagen, dass ein Lenkrad über eine Verbindungsstange mit einem ersten Steuerungsgetriebe verbunden ist, wobei über das Steuerungsgetriebe die Drehposition eines ersten Rades verändert wird und über eine weitere Steuerstange die Drehbewegung des Getriebes auf ein zweites Getriebe übertragen wird, welches zu einer Drehbewegung eines zweiten Rades führt. Zur Erreichung einer sauberen Kurvenfahrt ist es notwendig, dass zwei weitere Räder über elektrische Antriebe so angesteuert werden, dass eine saubere Kurvenfahrt ermöglicht wird. Die in diesem Dokument offenbarte Lenkvorrichtung weist den Nachteil auf, dass enge Kurvenradien nicht ermöglicht werden, da ausschließlich die beiden Vorderräder lenkbar sind, während die Ausrichtung der Hinterräder nicht veränderbar ist.

Ferner offenbart die DE 197 48 474 C1 eine Lenkvorrichtung in Form einer Hinterachslenkvorrichtung. Es wird vorgeschlagen, dass eine Drehbewegung eines Steuerelementes über ein Kopplungselement in Form eines Bandes auf Lenkelemente übertragen wird, die verdrehsicher mit Rädern gekuppelt sind. Auch die in der DE 197 48 474 C1 offenbarte Lenkvorrichtung weist den Nachteil auf, dass enge Kurvenradien nicht ermöglicht werden, da lediglich eine Achse des Fahrzeugs gelenkt werden kann. Darüber hinaus weist diese Vorrichtung den Nachteil auf, dass eine Querfahrt des Fahrzeugs nicht ermöglicht wird.

Schließlich offenbart die US 2009/0241708 A1 eine gattungsgemäße Lenkvorrichtung. Dieses Dokument ist gerichtet auf ein Fahrzeugsteuersystem und entsprechende Verfahren. Die Steuersysteme werden insbesondere für Traktoren eingesetzt, insbesondere Fahrzeuge, die die Möglichkeit eines geringen Wendekreises haben. Die in dem Dokument offenbarten Systeme enthalten Steuerungs- und Geschwindigkeitskoordinierungssysteme, die die Richtung und Geschwindigkeit der Drehung der Fahrzeugantriebseinheit steuern.

Es ist daher Aufgabe der vorliegenden Erfindung, die aus dem Stand der Technik bekannten Lenkvorrichtungen derartig weiterzuentwickeln, dass die Nachteile des Stands der Technik überwunden werden, insbesondere die Anlenkung von vier zwangsgelenkten Rädern so durchführbar ist, dass Kurvenfahrten ohne ein Radieren der Räder ermöglicht werden und darüber hinaus über die Lenkvorrichtung die zwangsgelenkten Räder so verstellt werden können, dass eine Querfahrt des Fahrzeugs in eine Richtung senkrecht zu einer Hauptfahrtrichtung ermöglicht wird.

Diese Aufgabe wird erfindungsgemäß dadurch gelöst, dass der erste Winkel und der erste zweite Winkel über zumindest eine erste Übertragungsfunktion miteinander verknüpft sind, wobei für einen ersten Winkelbereich des ersten Winkels die erste Übertragungsfunktion eine erste trigonometrische Funktion darstellt und für einen zweiten Winkelbereich des ersten Winkels ein erstes Polynom n-ten Grades mit $n \geq 2$ darstellt.

Dabei ist bevorzugt, dass die erste Übertragungsfunktion für einen dritten Winkelbereich des ersten Winkels ein erstes Polynom ersten Grades darstellt.

Weiterhin wird mit der Erfindung vorgeschlagen, dass das Lenkorgan zumindest eine Deichsel, zumindest ein Lenkrad, und/oder zumindest einen, insbesondere elektrischen, hydraulischen und/oder pneumatischen, Aktuator, umfasst.

Weiterhin ist bevorzugt, dass die Übertragungseinrichtung zumindest ein erstes Übertragungselement, wie ein Seilzugsystem, Wellensystem, Gelenksystem, Kettensystem und/oder Gestänge, zur Übertragung einer Bewegung des Lenkorgans auf das erste erste Zahnrad umfasst, wobei vorzugsweise das erste Übertragungselement exzentrisch an dem ersten ersten Zahnrad angreift.

Bei der vorgenannten Ausführungsform ist bevorzugt, dass die Übertragungseinrichtung zumindest eine erste Getriebeeinrichtung zur Übertragung der Bewegung des Lenkorgans auf das erste Übertragungselement umfasst, wobei vorzugsweise die erste Getriebeeinrichtung zumindest ein mechanisch mit dem Lenkorgan in Wirkverbindung stehendes erstes erstes Getriebezahnrad und ein erstes zweites Getriebezahnrad, an das das erste Übertragungselement , insbesondere das erste Gestänge, exzentrisch angreift, umfasst.

Es wird mit der Erfindung für die beiden vorgenannten Alternativen vorgeschlagen, dass die Übertragungseinrichtung zumindest ein erstes Lenkungsglied umfasst, mittels dem vorzugsweise eine Bewegung des Lenkorgans auf das erste erste Getriebezahnrad übertragbar ist, wobei insbesondere das erste Lenkungsglied zumindest eine Kette, zumindest einen Riemen, zumindest ein Justierelement, zumindest ein Kreuzungselement und/oder zumindest ein Spannelement umfasst.

Weiterhin kann eine erfindungsgemäße Lenkvorrichtung dadurch gekennzeichnet sein, dass im Übergang von dem ersten Winkelbereich in den zweiten Winkelbereich und/oder im Übergang von dem zweiten Winkelbereich in den dritten Winkelbereich die erste Übertragungsfunktion, die erste Ableitung der ersten Übertragungsfunktion und/oder die zweite Ableitung der ersten Übertragungsfunktion stetig ist bzw. sind.

Auch schlägt die Erfindung vor, dass ein erster erster Winkelbereich von 0° bis zu einem ersten positiven Winkelgrenzwert, ein erster zweiter Winkelbereich von dem ersten positiven Winkelgrenzwert bis zu einem zweiten positiven Winkelgrenzwert und ein erster dritter Winkelbereich von dem zweiten positiven Winkelgrenzwert bis zu einem dritten positiven Winkelgrenzwert verläuft und/oder ein zweiter erster Winkelbereich von 0° bis zu einem ersten negativen Winkelgrenzwert, ein zweiter zweiter Winkelbereich von dem ersten negativen Winkelgrenzwert bis zu einem zweiten negativen Winkelgrenzwert und ein zweiter dritter Winkelbereich von dem zweiten negativen Winkelgrenzwert bis zu einem dritten negativen Winkelgrenzwert verläuft.

Bei der vorgenannten Ausführungsform ist insbesondere bevorzugt, dass die Beträge des ersten positiven Winkelgrenzwerts und des ersten negativen Winkelgrenzwerts, des zweiten positiven Winkelgrenzwerts und des zweiten negativen Winkelgrenzwerts und/oder des dritten positiven Winkelgrenzwerts und des dritten negativen Winkelgrenzwerts gleich sind und/oder der erste positive Winkelgrenzwert zwischen 30° und 50°, bevorzugter zwischen 35° und 45° noch bevorzugter zwischen 39° und 41° und am bevorzugtesten 40° beträgt, der zweite positive Winkelgrenzwert zwischen 65° und 85°, bevorzugter zwischen 70° und 80° noch bevorzugter zwischen 74° und 76° und am bevorzugtesten 75° beträgt und/oder der dritte positive Winkelgrenzwert 90° beträgt.

Die erfindungsgemäße Lenkvorrichtung kann auch gekennzeichnet sein durch zumindest ein zweites Rad, wobei das zweite Rad um zumindest eine zweite Lenkachse drehbar und um zumindest eine zu der zweiten Lenkachse senkrecht verlaufende zweite Rotationsachse rotierbar gelagert ist.

Bei der vorgenannten Ausführungsform ist besonders bevorzugt, dass das erste Rad und das zweite Rad bezüglich einer entlang einer Hauptfahrtrichtung des Fahrzeugs verlaufenden Längsachse auf gegenüberliegenden Seiten angeordnet sind.

Bei den beiden vorgenannten Ausführungsformen schlägt die Erfindung vor, dass die Übertragungseinrichtung zur Übertragung einer Bewegung des Lenkorgans auf das zweite Rad zumindest ein mit dem Lenkorgan in mechanischer Wirkverbindung stehendes und zumindest eine Unrundverzahnung aufweisendes zweites erstes Zahnrad und zumindest ein mit dem zweiten Rad in mechanischer Wirkverbindung stehendes zweites zweites Zahnrad, das eine zur Unrundverzahnung des zweiten ersten Zahnrades komplementäre Unrundverzahnung umfasst, aufweist.

Weiterhin wird mit der Erfindung vorgeschlagen, dass eine Bewegung des Lenkorgans aus der einer Geradeausfahrt des Fahrzeugs entsprechenden Position in der einer Kurvenfahrt des Fahrzeugs in Richtung des ersten Winkels entsprechenden Position zu einer Drehung des zweiten Rades um die zweite Lenkachse um einen zweiten zweiten Winkel aus einer der Geradausfahrt des Fahrzeugs entsprechenden Position des zweiten Rades führt.

Eine besonders bevorzugte Ausführungsform der Lenkvorrichtung kann dadurch gekennzeichnet sein, dass der erste Winkel und der zweite zweite Winkel über zumindest eine zweite Übertragungsfunktion miteinander verknüpft sind, wobei für den ersten Winkelbereich die zweite Übertragungsfunktion eine zweite trigonometrische Funktion darstellt und für den zweiten Winkelbereich ein zweites Polynom n-ten Grades mit $n \geq 2$ darstellt, und vorzugsweise ferner für den dritten Winkelbereich ein zweites Polynom ersten Gerades darstellt.

Weiterhin wird mit der Erfindung vorgeschlagen, dass im Übergang von dem ersten Winkelbereich in den zweiten Winkelbereich und/oder im Übergang von dem zweiten Winkelbereich in den dritten Winkelbereich die zweite Übertragungsfunktion, die erste Ableitung der zweiten Übertragungsfunktion und/oder die zweite Ableitung der zweiten Übertragungsfunktion stetig ist bzw. sind.

Bei den beiden vorgenannten Ausführungsformen kann vorgesehen sein, dass der Funktionswert der ersten Übertragungsfunktion und/oder der erste zweite Winkel für positive Werte des ersten Winkels dem negativen Wert des Funktionswerts der zweiten Übertragungsfunktion und/oder des zweiten zweiten Winkels für negative Werte des ersten Winkels entspricht und der Funktionswert der ersten Übertragungsfunktion und/oder der erste zweite Winkel für negative Werte des ersten Winkels dem negativen Wert des Funktionswerts der zweiten Übertragungsfunktion und/oder des zweiten zweiten Winkels für positive Werte des ersten Winkels entspricht.

Eine besonders bevorzugte Ausführungsform der erfindungsgemäßen Lenkvorrichtung kann dadurch gekennzeichnet sein, dass die erste Übertragungsfunktion für positive Werte des ersten Winkels und die zweite Übertragungsfunktion für positive Werte des ersten Winkels und/oder die erste Übertragungsfunktion für negative Werte des ersten Winkels und die zweite Übertragungsfunktion für negative Werte des ersten Winkels so aufeinander abgestimmt sind, dass sich die erste Rotationsachse und die zweite Rotationsachse zumindest in dem ersten Winkelbereich stets in einem Schnittpunkt, der auf einer ortsfest entlang der Längsachse des Fahrzeugs angeordneten und senkrecht zu der Längsachse verlaufenden Geraden liegt, schneiden.

Auch wird mit der Erfindung vorgeschlagen, dass mittels des ersten Übertragungselements, insbesondere des ersten Gestänges, die Bewegung des Lenkorgans auf das zweite erste Zahnrad übertragbar ist, wobei vorzugsweise das erste Übertragungselement, insbesondere das erste Gestänge, exzentrisch an dem zweiten ersten Zahnrad angreift.

Besonders bevorzugt ist, dass die erfindungsgemäße Lenkvorrichtung gekennzeichnet ist durch zumindest ein drittes Rad und zumindest ein viertes Rad, wobei das dritte Rad um zumindest eine dritte Lenkachse drehbar und um zumindest eine, zu der dritten Lenkachse senkrecht verlaufenden dritte Rotationsachse rotierbar gelagert ist und das vierte Rad um zumindest eine vierte Lenkachse drehbar und um zumindest eine, zu der vierten Lenkachse senkrecht verlaufenden vierte Rotationsachse rotierbar gelagert ist.

Eine besonders bevorzugte Abwandlung der vorgenannten Ausführungsform kann dadurch gekennzeichnet sein, dass das dritte Rad und das vierte Rad bezüglich der Längsachse auf gegenüberliegenden Seiten angeordnet sind, insbesondere das erste Rad und das zweite Rad Vorderräder des Fahrzeugs darstellen und das dritte Rad und das vierte Rad Hinterräder des Fahrzeugs darstellen und/oder das erste Rad und das dritte Rad und/oder das zweite Rad und das vierte Rad entlang der Hauptfahrrichtung hintereinander angeordnet sind.

Weiterhin schlägt die Erfindung vor, dass das die Übertragungseinrichtung zur Übertragung einer Bewegung des Lenkorgans auf das dritte Rad zumindest ein mit dem Lenkorgan in mechanischer Wirkverbindung stehendes und zumindest eine Unrundverzahnung aufweisendes drittes erstes Zahnrad und zumindest ein mit dem dritten Rad in mechanischer Wirkverbindung stehendes drittes zweites Zahnrad, das eine zur Unrundverzahnung des dritten ersten Zahnrades komplementäre Unrundverzahnung umfasst, aufweist und/oder die Übertragungseinrichtung zur Übertragung einer Bewegung des Lenkorgans auf das vierte Rad zumindest ein mit dem Lenkorgan in mechanischer Wirkverbindung stehendes und zumindest eine Unrundverzahnung aufweisendes viertes erstes Zahnrad und zumindest ein mit dem vierten Rad in mechanischer Wirkverbindung stehendes viertes zweites Zahnrad, das eine zur Unrundverzahnung des vierten ersten Zahnrades komplementäre Unrundverzahnung umfasst, aufweist.

Bevorzugte Ausführungsformen der Erfindung können dadurch gekennzeichnet sein, dass die Bewegung des Lenkorgans aus der einer Geradeausfahrt des Fahrzeugs entsprechenden Position in die Kurvenfahrt des Fahrzeugs in Richtung des ersten Winkels entsprechenden Position zu einer Drehung des dritten Rades um die dritte Lenkachse um einen dritten zweiten Winkel aus einer der Geradausfahrt des Fahrzeugs entsprechenden Position des dritten Rades führt und/oder die Bewegung des Lenkorgans aus der einer Geradeausfahrt des Fahrzeugs entsprechenden Position in die einer Kurvenfahrt des Fahrzeugs in Richtung des ersten Winkels entsprechenden Position zu einer Drehung des vierten Rades um die vierte Lenkachse um einen vierten zweiten Winkel aus einer der Geradausfahrt des Fahrzeugs entsprechenden Position des vierten Rades führt.

Bei der vorgenannten Ausführungsform ist besonders bevorzugt, dass der erste Winkel und der dritte zweite Winkel über zumindest eine dritte Übertragungsfunktion miteinander verknüpft sind, wobei für den ersten Winkelbereich die dritte Übertragungsfunktion eine dritte trigonometrische Funktion darstellt und für den zweiten Winkelbereich ein drittes Polynom n-ten Grades mit $n \geq 2$ darstellt, vorzugsweise ferner für den dritten Winkelbereich ein drittes Polynom ersten Gerades darstellt, und/oder der erste Winkel und der vierte zweite Winkel über zumindest eine vierte Übertragungsfunktion miteinander verknüpft sind, wobei für den ersten Winkelbereich die vierte Übertragungsfunktion eine vierte trigonometrische Funktion darstellt und für den zweiten Winkelbereich ein viertes Polynom n-ten Grades mit $n \geq 2$ darstellt, vorzugsweise ferner für den dritten Winkelbereich ein viertes Polynom ersten Gerades darstellt.

Die vorgenannte Ausführungsform kann auch dadurch gekennzeichnet sein, dass im Übergang von dem ersten Winkelbereich in den zweiten Winkelbereich und/oder im Übergang von dem zweiten Winkelebereich in den dritten Winkelbereich die dritte Übertragungsfunktion, die vierte Übertragungsfunktion die erste Ableitung der dritten Übertragungsfunktion, die erste Ableitung der vierten Übertragungsfunktion, die zweite Ableitung der dritten Übertragungsfunktion und/oder die zweite Ableitung der vierten Übertragungsfunktion stetig ist bzw. sind.

Besonders bevorzugt ist, dass die erste Übertragungsfunktion, die zweite Übertragungsfunktion, die dritte Übertragungsfunktion und die vierte Übertragungsfunktion so aufeinander abgestimmt sind, dass sich die dritte Rotationsachse und die vierte Rotationsachse zumindest in dem ersten Winkelbereich stets in dem Schnittpunkt schneiden.

Bei der vorgenannten Ausführungsform wird vorgeschlagen, dass der Funktionswert der ersten Übertragungsfunktion und/oder der erste zweite Winkel dem negativen Wert des Funktionswerts der dritten Übertragungsfunktion und/oder des dritten zweiten Winkels entspricht und/oder der Funktionswert der zweiten Übertragungsfunktion und/oder der zweite zweite Winkel dem negativen Wert des Funktionswerts der vierten Übertragungsfunktion und/oder des vierten zweiten Winkels entspricht bzw. entsprechen.

Eine besonders bevorzugte Ausführungsform kann dadurch gekennzeichnet sein, dass die Übertragungseinrichtung zumindest ein zweites Übertragungselement, wie ein Seilzugsystem, Wellensystem, Gelenksystem, Kettensystem und/oder Gestänge, zur Übertragung einer Bewegung des Lenkorgans auf das dritte erste Zahnrad und/oder zur Übertragung einer Bewegung des Lenkorgans auf das vierte erste Zahnrad umfasst, vorzugsweise das zweite Übertragungselement exzentrisch an dem dritten ersten Zahnrad und/oder dem vierten ersten Zahnrad angreift.

Besonders bevorzugt ist hierbei, dass die Übertragungseinrichtung zumindest eine zweite Getriebeeinrichtung zur Übertragung der Bewegung des Lenkorgans auf das zweite Übertragungselement, insbesondere das zweite Gestänge, umfasst, vorzugsweise die zweite Getriebeeinrichtung zumindest ein, vorzugsweise mechanisch mit dem Lenkorgan in Wirkverbindung stehendes zweites erstes Getriebezahnrad und ein zweites zweites Getriebezahnrad, an das das zweite Übertragungselement, insbesondere das zweite Gestänge, exzentrisch angreift, umfasst.

Auch wird vorgeschlagen, dass mittels des ersten Lenkungsglieds eine Bewegung des Lenkorgans, der ersten Getriebeeinrichtung und/oder des ersten Übertragungselements auf die zweite Getriebeeinrichtung und/oder das zweite Übertragungselement, insbesondere das zweite erste Getriebezahnrad, übertragbar ist.

Eine erfindungsgemäße Lenkvorrichtung kann aufweisen zumindest ein entlang der Längsachse des Fahrzeugs angeordnetes fünftes Rad, wobei das fünfte Rad um zumindest eine fünfte Lenkachse drehbar und um zumindest eine zu der fünften Lenkachse senkrecht verlaufende fünfte Rotationsachse rotierbar gelagert ist.

Bei der vorgenannten Ausführungsform ist bevorzugt, dass eine Bewegung des Lenkorgans aus der einer Geradeausfahrt des Fahrzeugs entsprechenden Position in der einer Kurvenfahrt des Fahrzeugs in Richtung des ersten Winkels entsprechenden Position zu einer Drehung des fünften Rades um die fünfte Lenkachse um einen fünften zweiten Winkel aus einer der Geradausfahrt des Fahrzeugs entsprechenden Position des fünften Rades führt, wobei der fünfte zweite Winkel vorzugsweise dem negativen Wert des ersten Winkels entspricht und/oder die Bewegung des Lenkorgans mittels der Übertragungseinrichtung, vorzugsweise dem Lenkglied, ohne eine Unter- oder Übersetzung direkt auf das fünfte Rad, allerdings bezüglich des Drehsinns invertiert, übertragbar ist.

Auch ist bevorzugt, dass die fünfte Rotationsachse die erste Rotationsachse und die zweite Rotationsachse in dem Schnittpunkt schneidet.

Ferner schlägt die Erfindung vor, dass das erste Rad, das zweite Rad, das dritte Rad, das vierte Rad und/oder das fünfte Rad zumindest eine Lenkrolle aufweist bzw. aufweisen, wobei die Lenkrolle vorzugsweise zumindest eine um die jeweilige erste Lenkachse, zweite Lenkachse, dritte Lenkachse, vierte Lenkachse bzw. fünfte Lenkachse drehbare Gabel umfasst, wobei insbesondere in der Gabel zumindest eine um die jeweilige erste, zweite, dritte, vierte und/oder fünfte Rotationsachse drehbare Rolle und/oder Rad angeordnet ist.

Mit der Erfindung wird auch vorgeschlagen, dass die erste Übertragungsfunktion durch die Außenkontur und/oder Verzahnung des ersten ersten Zahnrades und ersten zweiten Zahnrades, die zweite Übertragungsfunktion durch die Außenkontur und/oder Verzahnung des zweiten ersten Zahnrades und zweiten zweiten Zahnrades, die dritte Übertragungsfunktion durch die Außenkontur und/oder Verzahnung des dritten ersten Zahnrades und dritten zweiten Zahnrades und/oder die vierte Übertragungsfunktion durch die Außenkontur und/oder Verzahnung des vierten ersten Zahnrades und vierten zweiten Zahnrades festgelegt ist bzw. sind.

Eine erfindungsgemäße Lenkvorrichtung kann auch dadurch gekennzeichnet sein, dass zur Umsetzung der ersten, zweiten, dritten und/oder vierten Übertragungsfunktion die Außenkontur/Verzahnung des ersten ersten Zahnrades, des ersten zweiten Zahnrades, des zweiten ersten Zahnrades, des zweiten zweiten Zahnrades, des dritten ersten Zahnrades, des dritten zweiten Zahnrades, des vierten ersten Zahnrades und/oder des vierten zweiten Zahnrades an ein Unter- und/oder Übersetzungsverhältnis der ersten Getriebeeinrichtung und/oder der zweiten Getriebeeinrichtung angepasst ist bzw. sind, wobei insbesondere das Über- und/oder Untersetzungsverhältnis der ersten Getriebeeinrichtung und/oder der zweiten Getriebeeinrichtung durch die Außenkontur/Verzahnung kompensiert ist bzw. sind.

Schließlich wird für die Erfindung für die Lenkvorrichtung vorgeschlagen, dass das erste erste Zahnrad, das erste zweite Zahnrad, das zweite erste Zahnrad, das zweite zweite Zahnrad, das dritte erste Zahnrad, das dritte zweite Zahnrad, das vierte erste Zahnrad, das vierte zweite Zahnrad, das erste erste Getriebezahnrad, das erste zweite Getriebezahnrad, das zweite erste Getriebezahnrad und/oder das zweite zweite Getriebezahnrad zumindest bereichsweise eine Evolventenverzahnung aufweist bzw. aufweisen.

Weiterhin liefert die Erfindung ein Fahrzeug, insbesondere Transportwagen, Hubwagen, Anhänger, Trailer und/oder Schubwagen, mit zumindest einer erfindungsgemäßen Lenkvorrichtung.

Der Erfindung liegt somit die überraschende Erkenntnis zugrunde, dass bei Einsatz eines Getriebes, in welchem Zahnräder mit einer Unrundverzahnung eingesetzt werden, um eine Lenkbewegung auf zwangsgelenkte Räder zu übertragen, die Übertragungsfunktion so ausgestaltet werden kann, dass einerseits über einen größtmöglichen Winkelbereich die Lenkbewegung der, vorzugsweise vier zwangsgelenkten, Räder so ausgebildet ist, dass eine Kurvenfahrt des Fahrzeugs ohne ein Radieren der Räder ermöglicht wird und darüber hinaus das Übersetzungsverhältnis bzw.

Untersetzungsverhältnis so angepasst werden kann, dass neben einer Geradeausfahrt und einer Kurvenfahrt auch eine Querfahrt, d.h. eine Bewegung des Fahrzeugs in einer Richtung senkrecht zu einer Hauptbewegungsrichtung, wiederum ohne ein Radieren der Räder, ermöglicht wird, indem die Übersetzungsfunktion in unterschiedliche Bereiche aufgespalten wird. Ausgehend von einer Winkelstellung eines Lenkorgans, welches einer Geradeausfahrt entspricht, kann für einen ersten Winkelbereich durch die Unrundverzahnung eine Übersetzung bzw. Untersetzung realisiert werden, die auf einer trigonometrischen Funktion basiert. Unter einer trigonometrischen Funktion im Sinne der Erfindung werden die trigonometrischen Funktionen selber und an die Funktionsverläufe dieser angenäherten Funktionen, wie Polynome, Spline und dergleichen, verstanden. Dies bedeutet, dass ein über das Lenkorgan eingestellter Winkel, wenn er in die Übersetzungsfunktion eingesetzt wird, einen zweiten Winkel ergibt, um den das Rad rotiert wird, wobei der zweite Winkel nachfolgend auch als Spurwinkel bezeichnet wird, so dass bei Einsatz mehrerer, insbesondere mehr als zwei, vorzugsweise drei oder vier, zwangsgelenkter Räder eine Kurvenfahrt über einen weiten Winkelbereich ohne ein Radieren der Räder ermöglicht wird. In einem an den ersten Winkelbereich anschließenden zweiten Winkelbereich wird als Übertragungsfunktion ein Polynom n-ten Grades, vorzugsweise ein Polynom fünften Grades, gewählt, um die Übersetzung/Untersetzung durch die Unrundverzahnung so anzupassen, dass ein Radieren weitestmöglich vermieden wird, wobei hierbei ausgenutzt wird, dass bei derartigen ersten Winkeln bzw. Lenkwinkeln das Fahrzeug mit vergleichsweise geringeren Geschwindigkeiten bewegt wird und so eine Abweichung von einer idealen Ausrichtung der Spurwinkel der einzelnen Räder für ein radierfreies Fahren einen vergleichsweise geringeren Effekt hat, aber gleichzeitig es ermöglicht wird, dass für einen ersten Winkel bzw. Lenkwinkel von 90° eine Querfahrt ermöglicht wird. Ergänzend kann in einem dritten Winkelbereich die Übertragungsfunktion in Form eines Polynom ersten Grades, d.h. einer Geradengleichung ausgebildet sein, um sicherzustellen, dass bei Erreichen eines maximalen Lenkwinkels, insbesondere 90°, eine Parallelausrichtung aller Räder ermöglicht wird, und so eine saubere Querfahrt des Fahrzeugs ohne ein Radieren der Räder erreicht wird.

Weitere Merkmale und Vorteile der Erfindung ergeben sich aus der nachfolgenden Beschreibung, in der bevorzugte Ausführungsformen der Erfindung anhand von Bespielen erläutert sind.

Dabei zeigt:

Figur 1a    eine perspektivische Aufsicht auf ein Fahrzeug mit einer erfindungsgemäßen Lenkvorrichtung bei einer Geradeausfahrt;

Figur 1b    eine Aufsicht auf die Lenkvorrichtung des Fahrzeugs der Fig. 1a;

Figur 2a    eine perspektivische Aufsicht auf das Fahrzeug der Fig. 1a während einer Kurvenfahrt;

Figur 2b    eine Aufsicht auf die Lenkvorrichtung des Fahrzeugs der in Fig. 2a gezeigten Lenkposition;

Figur 3a    eine perspektivische Aufsicht auf das Fahrzeug der Fig. 1a in einer Lenkstellung, die einer Querfahrt entspricht;

Figur 3b    eine Aufsicht auf die Lenkvorrichtung in der in Fig. 3a dargestellten Position;

Figur 4    eine grafische Auftragung einer trigonometrischen Funktion für einen zweiten Winkel bzw. Spurwinkel über einen ersten Winkel bzw. Lenkwinkel;

Figur 5    eine grafische Auftragung einer erfindungsgemäßen ersten und zweiten Übertragungsfunktion;

Figur 6    eine Tabelle, in der charakteristische Parameter erster und zweiter Zahnräder angegeben sind; und

Figur 7    eine skizzenhafte grafische Darstellung der Außenkontur erfindungsgemäßer erster und zweiter Zahnräder.

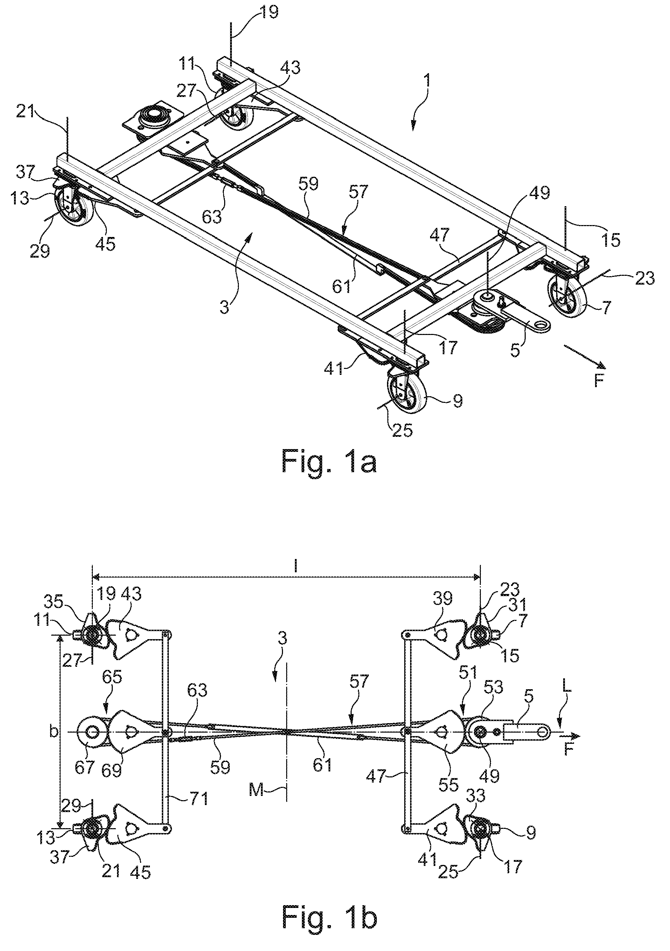

In Fig. 1a ist ein Fahrzeug 1 dargestellt, welches eine erfindungsgemäße Lenkvorrichtung 3 aufweist.

Die Lenkvorrichtung 3 weist ein Lenkorgan in Form einer Deichsel 5 auf. Ferner weist die Lenkvorrichtung 3 ein erstes Rad in Form einer zwangsgelenkten Lenkrolle 7, ein zweites Rad in Form einer zwangsgelenkten Lenkrolle 9, ein drittes Rad in Form einer zwangsgelenkten Lenkrolle 11 sowie ein viertes Rad in Form einer zwangsgelenkten Lenkrolle 13 auf.

Die Lenkrollen 7, 9, 11, 13 sind um ihre jeweilige erste Lenkachse 15, zweite Lenkachse 17, dritte Lenkachse 19 und vierte Lenkachse 21 drehbar gelagert. Darüber hinaus sind jeweilige Rollen bzw. Räder der Lenkrollen 7, 9, 11, 13 derartig gelagert, dass sie jeweils um eine erste Rotationsachse 23, zweite Rotationsachse 25, dritte Rotationsachse 27 und vierte Rotationsachse 29 drehbar sind.

Um die Lenkrollen 7, 9, 11, 13 um jeweilige Lenkachsen 15, 17, 19, 21 kontrolliert zu drehen, weist die Lenkvorrichtung 3 jeweilige Zahnräder auf, die eine Unrundverzahnung umfassen. Dabei weisen diese Zahnräder vorzugsweise eine Evolventenverzahnung auf, d.h. die Verzahnung ist so gewählt, dass die Verzahnung der ineinandergreifenden Zahnräder so ausgebildet ist, dass eine Verbindungslinie zwischen einem Wälzpunkt und einem momentanen Berührungspunkt der Flanken in der Verzahnung senkrecht zu einer Flankentangente steht.

Im Einzelnen umfasst die Lenkvorrichtung 3 ein erstes zweites Zahnrad 31, welches eine kontrollierte Bewegung der Lenkrolle 7 um die Lenkachse 15 ermöglicht, sowie analog ein der zweiten Lenkrolle 9 zugeordnetes zweites zweites Zahnrad 33, ein der dritten Lenkrolle zugeordnetes drittes zweites Zahnrad 35 sowie ein der vierten Lenkrolle 13 zugeordnetes viertes zweites Zahnrad 37.

Eine Drehbewegung bzw. Lenkbewegung der Deichsel 5 wird auf die jeweiligen zweiten Zahnräder 31, 33, 35, 37 über ein erstes erstes Zahnrad 39, ein zweites erstes Zahnrad 41, ein drittes erstes Zahnrad 43 und ein viertes erstes Zahnrad 45 übertragen. Dabei weist das erste erste Zahnrad 39 eine zu dem ersten zweiten Zahnrad 31 komplementäre Unrundverzahnung auf. Weiterhin sind das zweite erste Zahnrad 41 und das zweite zweite Zahnrad 33, das dritte erste Zahnrad 43 und das dritte zweite Zahnrad 35 sowie das vierte erste Zahnrad 45 und das vierte zweite Zahnrad 37 im Hinblick auf ihre Verzahnung aneinander angepasst.

In dem Fahrzeug 1 bzw. der Lenkvorrichtung 3 erfolgt die Bewegung der jeweiligen ersten Zahnräder 39, 41 über ein erstes Übertragungselement in Form eines ersten Gestänges 47. Die Bewegung der Deichsel 5 um eine Deichseldrehachse 49 wird über eine erste Getriebeeinrichtung 51 auf das Gestänge 47 übertragen. Dazu weist die erste Getriebeeinrichtung 51 ein erstes erstes Getriebezahnrad 53 und ein erstes zweites Getriebezahnrad 55 auf. Wie später ausführlicher erläutert wird, kann die erste Getriebeeinrichtung 51 ein Übersetzungs- bzw. Übersetzungsverhältnis ungleich 1:1 aufweisen, um bei einer Drehung der Deichsel 5 eine Kollision zwischen einzelnen Elementen, einer durch die Zahnräder 31, 39, 33, 41, das Gestänge 47 sowie das Getriebe 51 gebildeten Übertragungseinrichtung zu vermeiden.

Die Übertragungseinrichtung umfasst ferner ein Lenkungsglied 57, das wiederum eine Kette 59, ein Kreuzungselement 61 sowie ein Spann- bzw. Justierelement 63 aufweist. Mittels des

Lenkungsglieds 57 wird eine Drehbewegung des Lenkorgans in Form der Deichsel 5 auf eine zweite Getriebeeinrichtung 65 übertragen.

Die Getriebeeinrichtung 65 umfasst ein zweites erstes Getriebezahnrad 67 sowie ein zweites zweites Getriebezahnrad 69, durch welche die Drehbewegung des Lenkorgans 5 auf ein zweites Übertragungselement in Form eines zweiten Gestänges 71 übertragen wird.

Durch den Verlauf des Lenkglieds 57, insbesondere die Kreuzung der Kette 59 im Bereich des Kreuzungselements 61, wird die Bewegungsrichtung jedoch invertiert, so dass sich das erste erste Getriebezahnrad 53 und das zweite erste Getriebezahnrad 67 bei einer Drehung der Deichsel 5 in entgegengesetzter Richtung drehen. Kommt es daher zu einer Drehung der Deichsel 5, werden die zwei Getriebezahnräder 55, 69, die Gestänge 47, 71 sowie die ersten Zahnräder 39, 41 einerseits und 43, 45 andererseits spiegelsymmetrisch zu einer Mittelachse M, die senkrecht zu einer Längsachse L des Fahrzeugs 1 in eine Hauptfahrtrichtung F verläuft, bewegt.

Wie insbesondere Fig. 1b zu entnehmen ist, sind die erste Lenkrolle 7 und die zweite Lenkrolle 9 auf gegenüberliegenden Seiten der Längsachse L, insbesondere spiegelsymmetrisch zur Längsachse L, angeordnet, genauso wie die dritte Lenkrolle 11 und die vierte Lenkrolle 13 auf gegenüberliegenden Seiten der Längsachse L angeordnet sind.

Darüber hinaus sind die erste Lenkrolle 7 und die dritte Lenkrolle 11 bezüglich der Längsachse L hintereinander angeordnet, also spiegelsymmetrisch zur Mittelachse M. Gleiches gilt für die zweite Lenkrolle 9 und die vierte Lenkrolle 13, die entlang der Längsachse L ebenfalls hintereinander angeordnet sind. Die Erfindung ist nicht auf solche Konstellationen beschränkt, die Radpaare können auch unterschiedliche Spurweiten aufweisen.

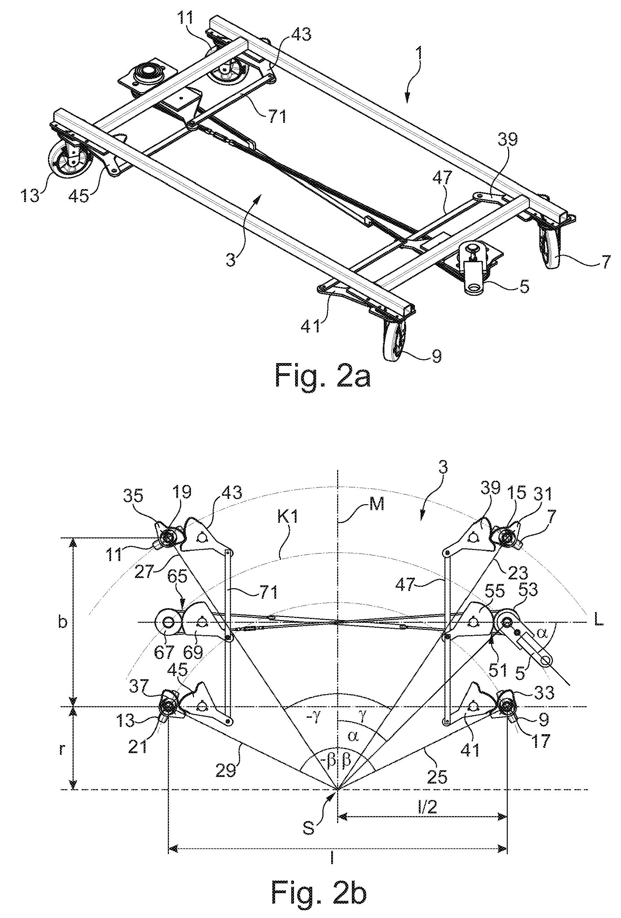

In den Fig. 2a und 2b ist das Fahrzeug 1 der Fig. 1a, 1b in einer Lenkposition der Deichsel 5 dargestellt, die einer Kurvenfahrt des Fahrzeugs 1 entspricht. Dazu ist die Deichsel 5 um einen Einschlagwinkel $\alpha$ bezüglich der Längsachse L gedreht. In den Fig. 1a - 3b dargestellten Ausführungsformen des Fahrzeugs entspricht dieser Einschlagwinkel $\alpha$ dem ersten Winkel, der den Winkel der Tangente an den Kurvenradius K1, den das Fahrzeug 1 beschreiten soll, beschreibt. In anderen Ausführungsformen kann vorgesehen sein, dass durch die erste Getriebeeinrichtung eine Unter- bzw. Übersetzung erfolgt, die durch die jeweiligen ersten und zweiten Zahnräder wieder kompensiert wird. Der Einschlagwinkel des Lenkorgans, insbesondere der Deichsel 5, stellt dann zwar den ersten Winkel dar, in der Übertragungseinrichtung, wird diese Bewegung jedoch mittels der Getriebeeinrichtungen 51, 65 untersetzt an die Gestänge 47, 71 weitergegeben. Die Unrundverzahnungsgetriebe, die durch die Zahnräderpaare 39-31, 41-33, 45-37, 43-35 gebildet sind, weisen dann eine entsprechende Übersetzung zur Kompensation auf. Es kann auch eine Unter- bzw. Übersetzung zwischen Drehung des Lenkorgans und dem ersten, den Kurvenwinkel des Fahrzeugs festlegenden Winkel vorhanden sein, auch nur über einen Teilwinkelbereich, insbesondere im zweiten und/oder dritten Winkelbereich.

Wie der Fig. 2b zu entnehmen ist, führt die Drehung der Deichsel 5 zu einer Drehung der ersten Lenkrolle 7 um die erste Lenkachse 15, der zweiten Lenkrolle 9 um die zweite Lenkachse 17, der dritten Lenkrolle 11 um die dritte Lenkachse 19 sowie der vierten Lenkrolle 13 um die vierte Lenkachse 21.

Aufgrund der Ausbildung der Übertragungseinrichtung, insbesondere der ersten Getriebeeinrichtung 51 sowie der zweiten Getriebeeinrichtung 65 als auch des ersten Gestänges 47 und des zweiten Gestänges 71, aber auch insbesondere der Ausbildung der Unrundverzahnung des ersten zweiten Zahnrads 31, des ersten ersten Zahnrades 39, des zweiten ersten Zahnrads 41, des zweiten zweiten Zahnrads 33, des dritten ersten Zahnrads 43, des dritten zweiten Zahnrads 35 sowie des vierten ersten Zahnrads 45 und des vierten zweiten Zahnrads 37 wird die Bewegung der Deichsel 5 so auf die Lenkrollen 7, 9, 11, 13 übertragen, dass sich die erste Rotationsachse 23, die zweite Rotationsachse 25, die dritte Rotationsachse 27 sowie die vierte Rotationsachse 29 in einem gemeinsamen Schnittpunkt S schneiden. Dieser Schnittpunkt S liegt insbesondere auf einer durch die Mittelachse M beschriebenen Geraden, die senkrecht zu der Längsachse L verläuft und jeweils eine Distanz 1/2 von den Lenkrollen 7, 9, 11, 13 beabstandet ist, wobei 1 der Abstand zwischen der ersten Lenkachse 15 und der zweiten Lenkachse 19 bzw. der zweiten Lenkachse 17 und der vierten Lenkachse 21 entlang der Längsachse L ist. Wie in Fig. 2b dargestellt, beschreibt b den Abstand zwischen der ersten Lenkachse 15 und der zweiten Lenkachse 17 bzw. zwischen der dritten Lenkachse 19 und der vierten Lenkachse 21 entlang der Mittelachse M.

Wie später erläutert werden wird, ist die durch Übertragungseinrichtung festgelegte jeweilige erste, zweite, dritte und vierte Übertragungsfunktion so ausgebildet, dass in einem ersten Winkelbereich des ersten Winkels α der Spurwinkel β, -β bzw. zweite Winkel der kurvenäußeren Räder, die in der in Fig. 2b dargestellten Lenkposition durch die erste Lenkrolle 7 und die dritte Lenkrolle 11 gebildet sind, und die Spurwinkel γ, -γ bzw. zweite Winkel der kurveninneren Räder, die in der in Fig. 2b dargestellten Lenkposition gebildet sind durch die zweite Lenkrolle 9 und die vierte Lenkrolle 13, so eingestellt werden, dass im ersten Winkelbereich der Schnittpunkt S stets auf der Mittelachse M liegt.

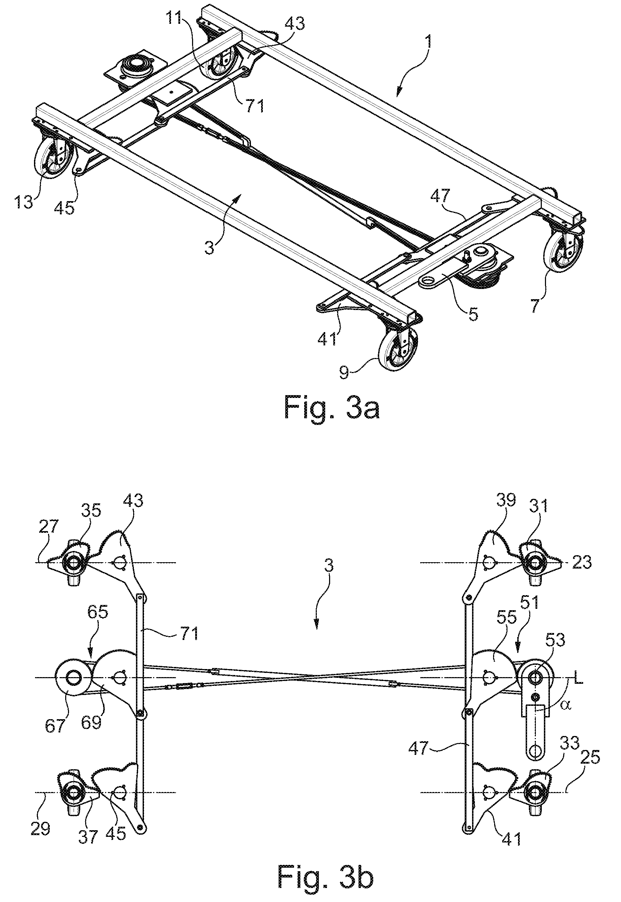

Erfindungsgemäß ist die jeweilige erste, zweite, dritte und vierte Übertragungsfunktion so angepasst, dass durch die Lenkvorrichtung 3 auch die in Fig. 3a und 3b dargestellte Lenkposition eingestellt werden kann. In dieser Lenkposition ist die Deichsel um den Einschlagwinkel bzw. ersten Winkel α von 90° um die Deichseldrehachse 49 ausgelenkt. Durch die entsprechende Wahl der Übertragungsfunktion, wie sie nachfolgend erläutert wird, wird erreicht, dass nach Durchfahrung eines zweiten Winkelbereichs für einen dritten Winkelbereich die Übertragungsfunktion einen linearen Zusammenhang zwischen dem ersten Winkel α und den jeweiligen Spurwinkeln bzw. zweiten Winkeln β, γ herstellt, so dass bei einem maximalen Einschlagwinkel der Deichsel 5, der auch größer oder kleiner als 90° sein kann, insbesondere durch die zuvor beschriebene Unter-/Übersetzung zwischen Einschlagwinkel und erstem Winkel, die Spurwinkel ebenfalls 90° entsprechen, also die Rotationsachsen 23, 25, 27, 29 parallel zueinander ausgerichtet sind. Damit wird erreicht, dass das Fahrzeug 1 eine ideale Querfahrt vollführen kann, also ohne ein Radieren der Räder 7, 9, 11, 13 in eine Richtung senkrecht zu der Längsachse, insbesondere entlang der Mittelachse M, bewegt werden kann.

Im Folgenden wird nun erläutert, wie die jeweilige erste Übertragungsfunktion, zweite Übertragungsfunktion, dritte Übertragungsfunktion und vierte Übertragungsfunktion für die Lenkung des in den Figuren 1a - 3b dargestellten Fahrzeugs 1 erfindungsgemäß berechnet und dadurch ein theoretisches Unrundzahngetriebe bestimmt wird, um die Außenkontur/Verzahnung der jeweiligen Zahnräder 31, 33, 35, 37, 39, 41, 43 und 45 festzulegen.

Wie zuvor dargelegt, beschreibt der Spurwinkel den Winkel, den das jeweilige Rad 7, 9, 11, 13 in Abhängigkeit des ersten Winkels α einnehmen soll. Für die Berechnung des Spurwinkels γ des kurveninneren Rades (Lenkrolle 9) und β des kurvenäußeren Rades (Lenkrolle 7) lässt sich für einen ersten Winkelbereich eine trigonometrische Funktion in Abhängigkeit von den Abständen 1 und b wie folgt herleiten:

$$\tan\alpha = \frac{0{,}5*l}{0{,}5*b+r} \quad \tan\beta = \frac{0{,}5*l}{r} \quad \tan\gamma = \frac{0{,}5*l}{b+r} \qquad \text{(Gl. 1)}$$

nach r umgestellt und eingesetzt:

$$r = \frac{(0{,}5*l) - (0{,}5*b*\tan\alpha)}{\tan\alpha}$$

Hierbei beschreibt r den Abstand des Schnittpunktes S von der Verbindungslinie der Lenkachsen der kurveninneren Räder (siehe Fig. 2b). Nach Umstellung dieser Gleichungen 1 nach r und gegenseitigem Einsetzen ergibt sich für die Spurwinkel β und γ in Abhängigkeit von dem Einschlagwinkel α die Gleichungen 2 und 3.

$$\beta = \arctan\frac{l*\tan\alpha}{l-b*\tan\alpha} \qquad \text{(Gl. 2)}$$

$$\gamma = \arctan\frac{l*\tan\alpha}{l+b*\tan\alpha} \qquad \text{(Gl. 3)}$$

Wird beispielsweise von einem Abstand 1 von 2000 mm und einem Abstand b von 1000 mm ausgegangen, so ergibt sich für einen ersten Winkel von α = 40° für ein kurveninneres Rad ein Spurwinkel/zweiter Winkel von β = 55,33° und für ein kurvenäußeres Rad ein Spurwinkel/zweiter Winkel γ = 30, 59°.

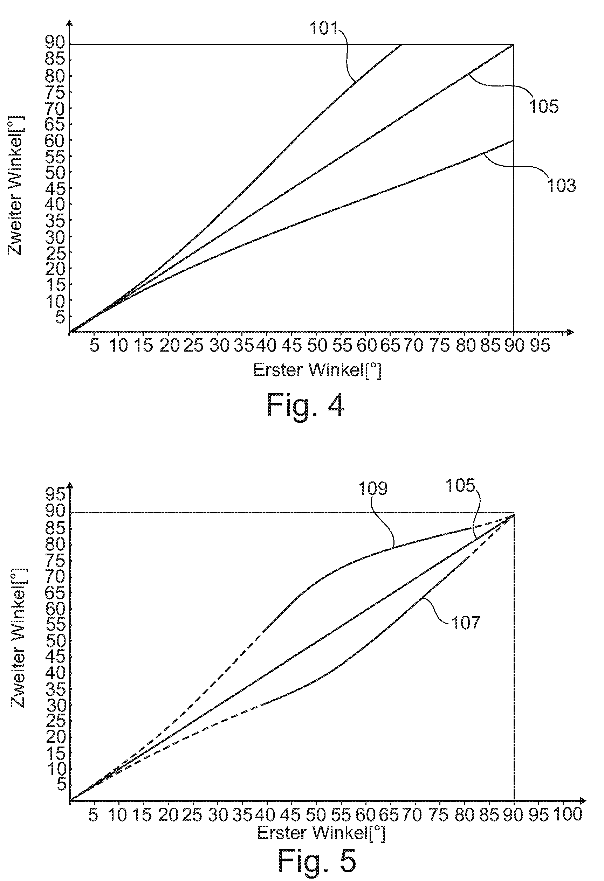

Wertet man jedoch die Gleichungen 2 und 3 aus, so zeigt sich, wie in Fig. 4 dargestellt, dass das kurveninnere und das kurvenäußere Rad bei einem ersten Winkel von 90° nicht eine Querfahrt ermöglichen, also insbesondere die Spurwinkel bei einem ersten Winkel von 90° ungleich 90° sind. In Fig. 4 zeigt Graph 101 die Auftragung von β über α und Graph 103 die Auftragung von γ über α. Graph 105 zeigt die Gerade α = α.

Erfindungsgemäß wird nun vorgeschlagen, dass die Übertragungsfunktion, wie sie sich aus den Gleichungen 2 und 3 ergibt, nur für einen ersten Winkelbereich des ersten Winkels, der bei einer direkten Übertragung der Bewegung der Deichsel 5 dem Einschlagwinkel der Deichsel 5 entspricht, verwendet wird. Für jeweilige zweite und dritte Winkelbereiche wird die Übertragungsfunktion durch abweichende Funktion bzw. Relationen ersetzt.

Die Gleichung 3 stellt insbesondere die erste Übertragungsfunktion für das erste Rad 7 in einem ersten Winkelbereich dar, während die Gleichung 2 die zweite Übertragungsfunktion für den ersten Winkelbereich des zweiten Rades 9 darstellt.

Wie sich darüber hinaus aus den Gleichungen 2 und 3 ergibt, divergieren die ersten und zweiten Übertragungsfunktionen für größere erste Winkel, je kleiner das Verhältnis von Abstand 1 zu Abstand b wird. Je nach Größe der Parameter 1 und b ist daher ein erster Winkelgrenzwert zu bestimmen, ab welchem von dem ersten Winkelbereich in den zweiten Winkelbereich gewechselt wird und die Übertragungsfunktion nicht durch eine trigonometrische Funktion, sondern ein Polynom gebildet wird.

Berechnungen haben gezeigt, dass bspw. für ein Verhältnis von 2:1 zwischen 1 und b ein geeigneter erster Winkelgrenzwert 40° ist. Grundsätzlich ist hierbei zu beachten, dass das Verhältnis von Abstand der Rollen in Länge (1) und Breite (b) nicht zu klein, aber im Umkehrschluss auch nicht unendlich groß werden darf, da es sonst bei zu stark gekrümmten Kurven zu erheblichen Eingriffsstörungen zwischen den Unrundverzahnungen der jeweiligen Zahnräder kommen kann.

Die Anforderungen, die an die Übertragungsfunktion im zweiten und dritten Winkelbereich zu stellen sind, sind dass ein optimaler Übergang von der Übertragungsfunktion im ersten Bereich, wie sie insbesondere durch die Gleichung 2 und 3 gegeben ist, bis zu einem maximalen Wert des ersten Winkels, insbesondere 90° erreicht wird. Auch sollte die entsprechende Übertragungsfunktion niedrige Potenzen aufweisen, um mit nur wenigen gezielten Bedingungen ein geeigneten Kurvenverlauf berechnen zu können.

Um einen derartigen fließenden Übergang zu erzielen, ist an die Übertragungsfunktion im zweiten Winkelbereich die Bedingung zu stellen, dass diese Funktion stetig im ersten Winkelgrenzwert mit der Übertragungsfunktion im ersten Winkelbereich, der ersten Ableitung der Übertragungsfunktion im ersten Winkelbereich sowie der zweiten Ableitung im ersten Winkelbereich ist.

Geht man von den zuvor bereits angeführten beispielhaften Abmessungen von 1=2000 mm und b=1000 mm sowie einem ersten Winkelgrenzwert von 40° aus, ergibt sich, dass bei Einsetzung der Werte in die Gleichung 2 für das kurveninnere Rad 9 der Funktionswert der Übertragungsfunktion bei einem ersten Winkel $\alpha$ von 40° 55.3263° beträgt, der Wert der ersten Ableitung in diesem Punkt 1,63696 beträgt, sowie der Wert der zweiten Ableitung an dieser Stelle -0,003393 beträgt, wie sich aus den nachfolgend angegebenen Gleichungen 4 ergibt.

$$f_2(x) = \arctan\left(\frac{2000*\tan(x)}{2000-1000*\tan(x)}\right)$$

$$f'_2(x) = \frac{-4}{4*\sin(x)*\cos(x)-(\sin(x))^2-4} \qquad (Gl.\ 4)$$

$$f''_2(x) = \frac{2*\pi*(4*(\cos(x))^2-\sin(x)*\cos(x)-2)}{45*(4*\sin(x)*\cos(x)-(\sin(x))^2-4)^2}$$

Führt man die analoge Berechnung für die Gleichung 3 für das kurvenäußere Rad 7 aus, ergibt sich aus den nachfolgend angegebenen Gleichungen 5 ein Funktionswert von 30,5874, ein Wert der ersten Ableitung von 0,6267 und ein Wert von -0,0029 der zweiten Ableitung am ersten Winkelgrenzwert.

$$f_1(x) = \arctan\left(\frac{2000*\tan(x)}{2000+1000*\tan(x)}\right)$$

$$f'_1(x) = \frac{4}{4*\sin(x)*\cos(x)-(\sin(x))^2+4} \qquad (Gl.\ 5)$$

$$f''_1(x) = \frac{-2*\pi*(4*(\cos(x))^2+\sin(x)*\cos(x)-2)}{45*(4*\sin(x)*\cos(x)+(\sin(x))^2+4)^2}$$

Basierend auf diesen Randbedingungen und der Bedingung, dass bei einem Winkel von 90° der Funktionswert der Übertragungsfunktion ebenfalls 90° betragen soll, lassen sich die Parameter eines Polynoms für den zweiten Winkelbereich berechnen. So kann für 90° ein entsprechender Steigungswert und Wert der zweiten Ableitung angenommen werden und die Randbedingungen für die Bestimmung des Polynoms bereitzustellen.

Bevorzugt ist jedoch, dass ein dritter Winkelbereich definiert wird, in dem für das kurvenäußere erste Rad 7 die Übertragungsfunktion als

$$f_1(x) = m_1 x + b \qquad \text{(Gl. 6)}$$

angenommen wird und für das kurveninnere Rad 9 als

$$f_2(x) = m_2 x + b \qquad \text{(Gl. 7)}$$

angenommen wird.

Legt man in diesen Gleichungen den dritten Winkelbereich als dritten Winkelgrenzwert 90° fest und wählt für das kurvenäußere Rad 7 eine Steigung von 1,4 und für das kurveninnere Rad eine Steigung von 0,4, ergeben sich als Randbedingungen für das Polynom im zweiten Winkelbereich die entsprechenden Funktionswerte der Gleichung 6 und 7, sowie deren erster Ableitung und deren zweiter Ableitung.

Anhand dieser Werte lässt sich dann für das erste Rad 7 anhand der Gleichung 8 bzw. für das zweite Rad 9 anhand der Gleichung 9 die entsprechenden Parameter des Polynoms bestimmen.

$$f_1(x) = a_1 x^5 + b_1 x^4 + c_1 x^3 + d_1 x^2 + e_1 x + f_1$$
$$f'_1(x) = 5a_1 x^4 + 4b_1 x^3 + 3c_1 x^2 + 2d_1 x + e_1 \qquad \text{(Gl. 8)}$$
$$f''_1(x) = 20a_1 x^3 + 12b_1 x^2 + 6c_1 x + 2d_1$$

$$f_2(x) = a_2 x^5 + b_2 x^4 + c_2 x^3 + d_2 x^2 + e_2 x + f_2$$
$$f'_2(x) = 5a_2 x^4 + 4b_2 x^3 + 3c_2 x^2 + 2d_2 x + e_2 \qquad \text{(Gl. 9)}$$
$$f''_2(x) = 20a_2 x^3 + 12b_2 x^2 + 6c_2 x + 2d_2$$

Aufgrund der Tatsache, dass insgesamt sechs Randbedingungen vorliegen, lassen sich dann die jeweiligen Parameter $a_1$ bis $f_1$ und $a_2$ bis $f_2$ bestimmen.

Wählt man bspw. als dritten Winkelbereich den Winkelbereich zwischen 75° und 90° aus, ergibt sich bei dem ersten Winkel 75° (zweiter Winkelgrenzwert) der Funktionswert von 69° als Randbedingung für die erste Übertragungsfunktion, dass die erste Ableitung dort den Wert 1,4 aufweist und die zweite Ableitung bei 75° den Wert 0 aufweist. Als Randbedingung für die zweite Übertragungsfunktion erzeugt Gleichung 7 als Randbedingung den Funktionswert bei einem ersten Winkel von 75° von 84°, wobei die erste Ableitung 0,4 beträgt und die zweite Ableitung 0 beträgt. Setzt man diese Werte nun in die Gleichungen 8 und 9 ein so ergeben sich für die voran angeführten Werte für die erste Übertragungsfunktion im zweiten Winkelbereich von 40 bis 75° zu:

$$f_1(x) = 3,7 * 10^{-7} x^5 - 1,16 * 10^{-4} x^4 + 0,01 x^3 - 0,8 x^2 + 23,2 x - 234,6 \qquad \text{(Gl. 10)}$$

und für die zweite Übertragungsfunktion im zweiten Winkelbereich zu

$$f_2(x) = -7,57 * 10^{-7} x^5 + 2,3 * 10^{-4} x^4 - 0,03 x^3 + 1,6 x^2 - 40,4 x + 428,8 \qquad \text{(Gl. 11)}$$

Wie die vorangehenden Erläuterungen zeigen, lässt sich durch Teilung der ersten und zweiten Übertragungsfunktion in jeweils eine trigonometrische Funktion und ein Polynom bzw. in eine trigonometrische Funktion, ein Polynom mit einem Grad > 2 und eine Gradengleichung, ein stetiger Funktionsverlauf erreichen, wie sich auch aus der graphischen Auftragung, wie sie in Figur 5 gezeigt ist, ergibt. Dabei zeigt Graph 107 den Verlauf der ersten Übertragungsfunktion in den jeweiligen Winkelbereich und Graph 109 den Verlauf der zweiten Übertragungsfunktion. Werden bspw. 6 Randparameter festgelegt, ergibt sich für das Polynom im zweiten Winkelbereich ein Polynom fünften Grades.

Die in den Figuren 4 und 5 dargestellten Spurwinkelverläufe bzw. Übertragungsfunktionen des kurveninneren zweiten Rades 9 und des kurvenäußeren ersten Rades 7 stellen das Verhältnis des ersten Winkels in Form der Tangente an eine gewünschte Kurvenrichtung, die das Fahrzeug fahren soll, im Verhältnis zum Spurwinkel bzw. zweiten Winkel des jeweiligen Rades dar. Wird eine direkte Übersetzung der Deichsel gewählt, entspricht der erste Winkel dann dem Einschlagwinkel der Deichsel.

Es hat sich jedoch als vorteilhaft herausgestellt, das Übersetzungsverhältnis zwischen erstem Winkel, insbesondere dem Einschlagwinkel der Deichsel 5, und der Drehung der zweiten Getriebezahnräder 55, 69 zu verändern, mittels der ersten und zweiten Getriebeeinrichtung 51, 65, um Kollisionen zwischen den Zahnrädern 39, 41, 43, 45, 55, 69, dem Gestänge 47, 71 bzw. weiteren Elementen der Übertragungseinrichtung zu verhindern.

Wird eine passende Über- bzw. Untersetzung gefunden, mit welcher der durch die Deichsel erzeugte Einschlagwinkel so übersetzt bzw. untersetzt wird, dass über die erste bzw. zweite Getriebeeinrichtung ein kleinerer Winkel an das Gestänge 47, 71 weitergegeben wird, sollte durch die Unrundverzahnung der Zahnräder 31, 39, 33, 41, 35, 43 bzw. 37, 45 dieses Übersetzungsverhältnis revidiert werden, um einen entsprechenden Spurwinkel bezüglich des kurveninneren und kurvenäußeren Rades zu realisieren. Als geeignetes Kriterium für eine geeignete Übersetzung bzw. Untersetzung hat sich ergeben, wie schnell die Verläufe der Übertragungsfunktionskurven ansteigen. Je steiler der Verlauf ist, desto schwieriger ist es, an den jeweiligen Winkelgrenzwerten eine geeignete Übergangsfunktion zum nächsten Winkelgrenzwert zu bestimmen.

Als für die zuvor beispielhaft angegebenen Parameterwerte 1, b hat sich ein Übersetzungsverhältnis von 3:2 als sinnvoll herausgestellt. So hat sich gezeigt, dass sich bei kleineren Übersetzungen das Problem der Kollisionsgefahr erhöht und bei größeren Übersetzungsverhältnissen die Steigung der Kurven einen zu hohen Wert annimmt. Folgt man der zuvor für eine Übersetzung von 1:1 zwischen der Deichsel und dem Hebelwerk skizzierten Berechnungsmethode für die Bestimmung der trigonometrischen Funktion im ersten Winkelbereich, der Geradengleichung im dritten Winkelbereich und des Polynoms im zweiten Winkelbereich ergibt sich für die erste Übertragungsfunktion im ersten Winkelbereich die Gleichung 12 und für die zweite Übertragungsfunktion im ersten Winkelbereich die Gleichung 13.

$$f_1(x) = 1{,}5 * \arctan\left(\frac{2000*\tan(x)}{2000+1000*\tan(x)}\right) \qquad \text{(Gl. 12)}$$

$$f_2(x) = 1{,}5 * \arctan\left(\frac{2000*\tan(x)}{2000-1000*\tan(x)}\right) \qquad \text{(Gl. 13)}$$

Für den dritten Winkelbereich ergibt sich die erste Übertragungsfunktion zu Gleichung 14 und die zweite Übertragungsfunktion im dritten Winkelbereich zu Gleichung 15.

$$f_1(x) = 2{,}1x - 36 \qquad \text{(Gl. 14)}$$

$$f_2(x) = 0{,}7x + 48 \qquad \text{(Gl. 15)}$$

Schließlich ergibt sich für die erste Übertragungsfunktion im zweiten Winkelbereich die Gleichung 16 und für die zweite Übertragungsfunktion im zweiten Winkelbereich die Gleichung 17.

$$f_1(x) = 7{,}3 * 10^{-8}x^5 - 6{,}05 * 10^{-5}x^4 + 0{,}01x^3 - 0{,}4x^2 + 10{,}26x - 68{,}7 \qquad \text{(Gl. 16)}$$

$$f_2(x) = -3{,}5 * 10^{-6}x^5 + 7{,}4 * 10^{-4}x^4 - 0{,}06x^3 + 2{,}4x^2 - 42{,}7x + 314{,}2 \qquad \text{(Gl. 17)}$$

Hierbei ist zu beachten, dass die Variable x in den Gleichungen 12 - 17 nicht der erste Winkel, also der Einschlagwinkel der Deichsel, ist, sondern der Drehwinkel der Getriebezahnräder 55, 69, also der erste Winkel multipliziert mit 2/3 aufgrund des Übersetzungsverhältnisses von 3:2.

Mittels der zuvor beschriebenen Übertragungsfunktionen lassen sich die entsprechenden Außenkonturen der Zahnräder 31, 39, 33, 41, 37, 45 und 35, 43 bestimmen. Die jeweiligen Radien der Zahnräder ergeben sich aus den nachfolgend angegebenen Gleichungen 18 und 19 bzw. wenn Gleichung 18 in Gleichung 19 eingesetzt wird, zu Gleichung 20.

$$r_1 = a - r_0 \qquad (\text{Gl. } 18)$$

$$i = \frac{r_0}{r_1} \qquad (\text{Gl. } 19)$$

$$r_0 = \frac{a * i}{i + 1} \qquad (\text{Gl. } 20)$$

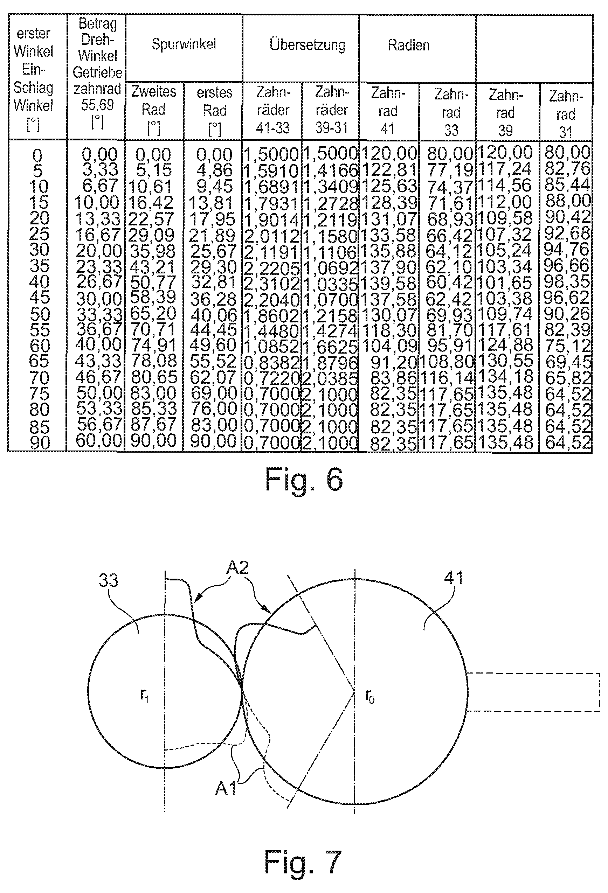

Hierbei beschreibt i das Übersetzungsverhältnis und a den Achsabstand zwischen dem jeweiligen Zahnrad, beispielsweise zwischen den Zahnrädern 31 und 39. Geht man von den zuvor angeführten Beispielwerten und einem Achsabstand von a = 200 mm, ergeben sich die in der in Fig. 6 dargestellten Tabelle aufgeführten Werte, in Abhängigkeit vom ersten Winkel, also dem Einschlagwinkel der Deichsel (erste Spalte), für die Beträge des Drehwinkels der Getriebezahnräder 55, 69 (zweite Spalte), die jeweiligen Spurwinkel bzw. zweiten Winkel des jeweiligen Rades (dritte und vierte Spalte), die Übersetzungsverhältnisse des Zahnradgetriebes 33 - 41 (fünfte Spalte), die Übersetzungsverhältnisse des Zahnradgetriebes 39 - 31 (sechste Spalte), sowie die Außenkonturradien der Zahnräder 41, 33, 39, 31 (achte bis zehnte Spalte).

In Figur 7 ist darüber hinaus die entsprechend berechnete Geometrie der Außenkontur des zweiten ersten Zahnrads 41 und zweiten zweiten Zahnrads 33 mit Unrundverzahnung dargestellt (im Gegensatz zu den Figuren 1a - 3b von einer Unterseite). Hierbei sind sowohl die Außenkontur für positive Winkel als auch negative Winkel gezeigt, also, dass das zweite Rad als ein kurveninneres bzw. kurvenäußeres Rad fungiert. Dabei ist in Fig. 7 die Position der Zahnräder bei einem ersten Winkel von 0° dargestellt. Der hell gezeichnete Abschnitt A1 der Außenkontur ist der Bereich, wenn das zweite Rad 9 als kurvenäußeres Rad fungiert (positive Winkel β) während der dunkel gezeichnete Abschnitt A2 der Bereich ist, wenn das zweite Rad 9 als kurveninneres Rad fungiert (negative Winkel -β).

Basierend auf den zuvor erläuterten Berechnungen für das erste Rad 7 und das zweite Rad 9 lassen sich die entsprechende dritte Übertragungsfunktion für das dritte Rad 11 und die vierte Übertragungsfunktion für das vierte Rad 13 bestimmen. Geht man beispielsweise von der in den Figuren 1a - 3b dargestellten, zur Mittelachse M spiegelsymmetrisch aufgebauten Lenkvorrichtung aus, so entspricht die erste Übertragungsfunktion im Wesentlichen der dritten Übertragungsfunktion, jedoch mit negativem Vorzeichen, entsprechend die zweite Übertragungsfunktion der vierten Übertragungsfunktion ebenfalls multipliziert mit dem Faktor - 1. Hierbei ist ferner vorausgesetzt, dass die Getriebeeinrichtungen 51, 65 identische Über-/Untersetzungsverhältnisse aufweisen. Somit ergibt sich, dass die Außenkonturen der jeweiligen Zahnräder, wie aus Fig. 1a bis 3b ersichtlich, spiegelsymmetrisch zur Mittelachse M bzw. Längsachse L aufgebaut sind.

In einer nicht dargestellten Abwandlung kann das Fahrzeug auch als "3-Rad" ausgebildet werden, bei dem dann das dritte und vierte Rad (also die Hinterräder, die auf der dem Lenkorgan abgewandten Seite angeordnet sind) durch ein einzelnes fünftes Rad ersetzt werden. Wird dieses entlang der Längsachse angeordnet, kann die Drehbewegung des Lenkorgans direkt ohne Unter-/Übersetzung an das fünfte Rad übertragen werden. Selbstverständlich kann durch das fünfte Rad auch ein Vorderradpaar ersetzt werden, insbesondere direkt an das Lenkorgan im Bereich der Drehachse des Lenkorgans (z.B. die Deichseldrehachse) angeordnet werden. In diesem Fall würden dann auf die Hinterräder durch die zuvor beschriebenen und beanspruchten Unrundverzahnungsgetriebe eine Lenkbewegung übertragen werden.

**Bezugszeichen**

| | | | |
|---|---|---|---|
| 1 | Fahrzeug | 55 | Getriebezahnrad |
| 3 | Lenkvorrichtung | 57 | Lenkungsglied |
| 5 | Deichsel | 59 | Kette |
| 7 | Lenkrolle | 61 | Kreuzungselement |
| 9 | Lenkrolle | 63 | Spann-/Justierelement |
| 11 | Lenkrolle | 65 | Getriebeeinrichtung |
| 13 | Lenkrolle | 67 | Getriebezahnrad |
| 15 | Lenkachse | 69 | Getriebezahnrad |
| 17 | Lenkachse | 71 | Gestänge |
| 19 | Lenkachse | 101 | Graph |
| 21 | Lenkachse | 103 | Graph |

(fortgesetzt)

| | | | |
|---|---|---|---|
| 23 | Rotationsachse | 105 | Graph |
| 25 | Rotationsachse | 107 | Graph |
| 27 | Rotationsachse | 109 | Graph |
| 29 | Rotationsachse | | |
| 31 | Zahnrad | M | Mittelachse |
| 33 | Zahnrad | L | Längsachse |
| 35 | Zahnrad | F | Hauptfahrtrichtung |
| 37 | Zahnrad | S | Schnittpunkt |
| 39 | Zahnrad | 1 | Abstand |
| 41 | Zahnrad | b | Abstand |
| 43 | Zahnrad | K1 | Kurvenradius |
| 45 | Zahnrad | $\alpha$ | Einschlagwinkel |
| 47 | Gestänge | $\beta, \gamma$ | Spurwinkel |
| 49 | Deichseldrehachse | A1 | Abschnitt |
| 51 | Getriebeeinrichtung | A2 | Abschnitt |
| 53 | Getriebezahnrad | | |

**Patentansprüche**

1. Lenkvorrichtung (3) für ein Fahrzeug (1), insbesondere einen Transportwagen, umfassend zumindest ein Lenkorgan (5) und eine Übertragungseinrichtung (31, 39, 47, 51) zur Übertragung einer Lenkbewegung des Lenkorgans (5) auf zumindest ein erstes Rad (7), wobei das erste Rad (7) um zumindest eine erste Lenkachse (15) drehbar und um zumindest eine, zu der ersten Lenkachse (15) senkrecht verlaufende erste Rotationsachse (23) rotierbar gelagert ist und die Übertragungseinrichtung zumindest ein mit dem Lenkorgan (5) in mechanischer Wirkverbindung stehendes und zumindest eine Unrundverzahnung aufweisendes erstes erstes Zahnrad (39) und zumindest ein mit dem ersten Rad (7) in mechanischer Wirkverbindung stehendes erstes zweites Zahnrad (31), das eine zur Unrundverzahnung des ersten ersten Zahnrades (39) komplementäre Unrundverzahnung umfasst, aufweist, wobei eine Bewegung des Lenkorgans (5) aus einer einer Geradeausfahrt des Fahrzeugs (1) entsprechenden Position in eine einer Kurvenfahrt des Fahrzeugs (1) in Richtung eines ersten Winkels ($\alpha$) entsprechenden Position zu einer Drehung des ersten Rades (7) um die erste Lenkachse (15) um einen ersten zweiten Winkel ($\gamma$) aus einer der Geradausfahrt des Fahrzeugs (1) entsprechenden Position des ersten Rades (7) führt, wobei der erste Winkel ($\alpha$) und der erste zweite Winkel ($\gamma$) über zumindest eine erste Übertragungsfunktion miteinander verknüpft sind und für einen ersten Winkelbereich des ersten Winkels ($\alpha$) die erste Übertragungsfunktion eine erste trigonometrische Funktion darstellt, **dadurch gekennzeichnet, dass** die erste Übertragungsfunktion für einen zweiten Winkelbereich des ersten Winkels ($\alpha$) ein erstes Polynom n-ten Grades mit n $\geq$ 2 darstellt.

2. Lenkvorrichtung nach Anspruch 1, **dadurch gekennzeichnet, dass** die erste Übertragungsfunktion für einen dritten Winkelbereich des ersten Winkels ($\alpha$) ein erstes Polynom ersten Grades darstellt.

3. Lenkvorrichtung nach Anspruch 1 oder 2, **dadurch gekennzeichnet, dass** das Lenkorgan zumindest eine Deichsel (5), zumindest ein Lenkrad, und/oder zumindest einen, insbesondere elektrischen, hydraulischen und/oder pneumatischen, Aktuator, umfasst.

4. Lenkvorrichtung nach einem der vorangehenden Ansprüche, **dadurch gekennzeichnet, dass** im Übergang von dem ersten Winkelbereich in den zweiten Winkelbereich und/oder im Übergang von dem zweiten Winkelbereich in den dritten Winkelbereich die erste Übertragungsfunktion, die erste Ableitung der ersten Übertragungsfunktion und/oder die zweite Ableitung der ersten Übertragungsfunktion stetig ist bzw. sind.

5. Lenkvorrichtung nach einem der vorangehenden Ansprüche, **dadurch gekennzeichnet, dass** ein erster erster Winkelbereich von 0° bis zu einem ersten positiven Winkelgrenzwert, ein erster zweiter Winkelbereich von dem ersten positiven Winkelgrenzwert bis zu einem zweiten positiven Winkelgrenzwert und ein erster dritter Winkelbereich von dem zweiten positiven Winkelgrenzwert bis zu einem dritten positiven Winkelgrenzwert verläuft und/oder ein zweiter erster Winkelbereich von 0° bis zu einem ersten negativen Winkelgrenzwert, ein zweiter zweiter Winkelbereich von dem ersten negativen Winkelgrenzwert bis zu einem zweiten negativen Winkelgrenzwert und ein zweiter dritter Winkelbereich von dem zweiten negativen Winkelgrenzwert bis zu einem dritten negativen Winkelgrenzwert verläuft, wobei vorzugsweise die Beträge des ersten positiven Winkelgrenzwerts und des ersten negativen Winkelgrenzwerts, des zweiten positiven Winkelgrenzwerts und des zweiten negativen Winkelgrenzwerts und/oder des dritten positiven Winkelgrenzwerts und des dritten negativen Winkelgrenzwerts gleich sind und/oder der erste positive Winkelgrenzwert zwischen 30° und 50°, bevorzugter zwischen 35° und 45° noch bevorzugter zwischen 39° und 41° und am bevorzugtesten 40° beträgt, der zweite positive Winkelgrenzwert zwischen 65° und 85°, bevorzugter zwischen 70° und 80° noch bevorzugter zwischen 74° und 76° und am bevorzugtesten 75° beträgt und/oder der dritte positive Winkelgrenzwert 90° beträgt.

6. Lenkvorrichtung nach einem der vorangehenden Ansprüche, **gekennzeichnet durch** zumindest ein zweites Rad (9), wobei das zweite Rad (9) um zumindest eine zweite Lenkachse (17) drehbar und um zumindest eine zu der zweiten Lenkachse (17) senkrecht verlaufende zweite Rotationsachse (25) rotierbar gelagert ist, wobei vorzugsweise das erste Rad (7) und das zweite Rad (9) bezüglich einer entlang einer Hauptfahrtrichtung (F) des Fahrzeugs (1) verlaufenden Längsachse (L) auf gegenüberliegenden Seiten angeordnet sind, und/oder vorzugsweise die Übertragungseinrichtung zur Übertragung einer Bewegung des Lenkorgans (5) auf das zweite Rad (9) zumindest ein mit dem Lenkorgan (5) in mechanischer Wirkverbindung stehendes und zumindest eine Unrundverzahnung aufweisendes zweites erstes Zahnrad (41) und zumindest ein mit dem zweiten Rad (9) in mechanischer Wirkverbindung stehendes zweites zweites Zahnrad (33), das eine zur Unrundverzahnung des zweiten ersten Zahnrades (41) komplementäre Unrundverzahnung umfasst, aufweist.

7. Lenkvorrichtung nach Anspruch 6, **dadurch gekennzeichnet, dass** eine Bewegung des Lenkorgans (5) aus der einer Geradeausfahrt des Fahrzeugs (1) entsprechenden Position in der einer Kurvenfahrt des Fahrzeugs in Richtung des ersten Winkels ($\alpha$) entsprechenden Position zu einer Drehung des zweiten Rades (9) um die zweite Lenkachse (17) um einen zweiten zweiten Winkel ($\beta$) aus einer der Geradausfahrt des Fahrzeugs (1) entsprechenden Position des zweiten Rades führt, wobei insbesondere der erste Winkel ($\alpha$) und der zweite zweite Winkel ($\beta$) über zumindest eine zweite Übertragungsfunktion miteinander verknüpft sind, wobei für den ersten Winkelbereich die zweite Übertragungsfunktion eine zweite trigonometrische Funktion darstellt und für den zweiten Winkelbereich ein zweites Polynom n-ten Grades mit $n \geq 2$ darstellt, und vorzugsweise ferner für den dritten Winkelbereich ein zweites Polynom ersten Gerades darstellt.

8. Lenkvorrichtung nach Anspruch 7, **dadurch gekennzeichnet, dass** im Übergang von dem ersten Winkelbereich in den zweiten Winkelbereich und/oder im Übergang von dem zweiten Winkelbereich in den dritten Winkelbereich die zweite Übertragungsfunktion, die erste Ableitung der zweiten Übertragungsfunktion und/oder die zweite Ableitung der zweiten Übertragungsfunktion stetig ist bzw. sind, und/oder **dadurch gekennzeichnet, dass** der Funktionswert der ersten Übertragungsfunktion und/oder der erste zweite Winkel ($\gamma$) für positive Werte des ersten Winkels ($\alpha$) dem negativen Wert des Funktionswerts der zweiten Übertragungsfunktion und/oder des zweiten zweiten Winkels ($\beta$) für negative Werte des ersten Winkels ($\alpha$) entspricht und der Funktionswert der ersten Übertragungsfunktion und/oder der erste zweite Winkel ($\gamma$) für negative Werte des ersten Winkels ($\alpha$) dem negativen Wert des Funktionswerts der zweiten Übertragungsfunktion und/oder des zweiten zweiten Winkels ($\beta$) für positive Werte des ersten Winkels ($\alpha$) entspricht.

9. Lenkvorrichtung nach Anspruch 7 oder 8, **dadurch gekennzeichnet, dass** die erste Übertragungsfunktion für positive Werte des ersten Winkels ($\alpha$) und die zweite Übertragungsfunktion für positive Werte des ersten Winkels ($\alpha$) und/oder die erste Übertragungsfunktion für negative Werte des ersten Winkels ($\alpha$) und die zweite Übertragungsfunktion für negative Werte des ersten Winkels ($\alpha$) so aufeinander abgestimmt sind, dass sich die erste Rotationsachse (23) und die zweite Rotationsachse (25) zumindest in dem ersten Winkelbereich stets in einem Schnittpunkt (S), der auf einer ortsfest entlang der Längsachse (L) des Fahrzeugs angeordneten und senkrecht zu der Längsachse (L) verlaufenden Geraden (M) liegt, schneiden.

10. Lenkvorrichtung nach einem der vorangehenden Ansprüche, **dadurch gekennzeichnet, dass** das erste Rad (7) und/oder das zweite Rad (9) zumindest eine Lenkrolle aufweist bzw. aufweisen, wobei die Lenkrolle vorzugsweise zumindest eine um die jeweilige erste Lenkachse (15) und/oder zweite Lenkachse (17) drehbare Gabel umfasst, wobei insbesondere in der Gabel zumindest eine um die jeweilige erste und/oder zweite Rotationsachse drehbare Rolle und/oder Rad angeordnet ist.

11. Lenkvorrichtung nach einem der vorangehenden Ansprüche, **dadurch gekennzeichnet, dass**

die erste Übertragungsfunktion durch die Außenkontur und/oder Verzahnung des ersten ersten Zahnrades (39) und ersten zweiten Zahnrades (31) und/oder die zweite Übertragungsfunktion durch die Außenkontur und/oder Verzahnung des zweiten ersten Zahnrades (41) und zweiten zweiten Zahnrades (33) festgelegt ist bzw. sind.

12. Lenkvorrichtung nach einem der vorangehenden Ansprüche, **dadurch gekennzeichnet, dass**
zur Umsetzung der ersten und/oder zweiten Übertragungsfunktion die Außenkontur/ Verzahnung des ersten ersten Zahnrades (39), des ersten zweiten Zahnrades (31), des zweiten ersten Zahnrades (41) und/oder des zweiten zweiten Zahnrades (33) an ein Unter- und/oder Übersetzungsverhältnis einer ersten Getriebeeinrichtung (51) und/oder einer zweiten Getriebeeinrichtung (65) angepasst ist bzw. sind, wobei insbesondere das Über- und/oder Untersetzungsverhältnis der ersten Getriebeeinrichtung (51) und/oder der zweiten Getriebeeinrichtung (65) durch die Außenkontur/Verzahnung kompensiert ist bzw. sind.

13. Lenkvorrichtung nach einem der vorangehenden Ansprüche, **dadurch gekennzeichnet, dass**
das erste erste Zahnrad (39), das erste zweite Zahnrad (31), das zweite erste Zahnrad (41), und/oder das zweite zweite Zahnrad (33), zumindest bereichsweise eine Evolventenverzahnung aufweist bzw. aufweisen.

14. Fahrzeug (1), insbesondere Transportwagen, Hubwagen, Anhänger, Trailer und/oder Schubwagen, umfassend zumindest eine Lenkvorrichtung (3) nach einem der vorangehenden Ansprüche.

## Claims

1. A steering device (3) for a vehicle (1), in particular a transport cart, comprising at least one steering element (5) and a transferring apparatus (31, 39, 47, 51) for transferring a steering motion of the steering element (5) to at least one first wheel (7), wherein the first wheel (7) is supported in such a way that the first wheel can be turned about at least one first steering axis (15) and can be rotated about at least one first axis of rotation (23) extending perpendicularly to the first steering axis (15), and the transferring apparatus has at least one first first gear (39) which is mechanically operatively connected to the steering element (5) and having at least one noncircular arrangement of teeth, and at least one first second gear (31) which is mechanically operatively connected to the first wheel (7) and which comprises a noncircular arrangement of teeth complementary to the noncircular arrangement of teeth of the first first gear (39), wherein a motion of the steering element (5) from a position corresponding to straight-ahead travel of the vehicle (1) to a position corresponding to cornering of the vehicle (1) in the direction of a first angle ($\alpha$) leads to a turning of the first wheel (7) about the first steering axis (15) by a first second angle ($\gamma$) from a position of the first wheel (7) corresponding to the straight-ahead travel of the vehicle (1), wherein
the first angle ($\alpha$) and the first second angle ($\gamma$) are linked to each other by means of at least one first transfer function and the first transfer function for a first angular range of the first angle ($\alpha$) constitutes a first trigonometric function, **characterized in that**
the first transfer function for a second angular range of the first angle ($\alpha$) constitutes a first polynomial of the nth degree, with n $\geq$ 2.

2. The steering device according to Claim 1, **characterized in that** the first transfer function for a third angular range of the first angle ($\alpha$) constitutes a first polynomial of first degree.

3. The steering device according to Claim 1 or 2, **characterized in that** the steering element comprises at least one drawbar (5), at least one steering wheel, and/or at least one, in particular electrical, hydraulic and/or pneumatic, actuator.

4. The steering device according to any one of the preceding claims, **characterized in that**
in the transition from the first angular range to the second angular range and/or in the transition from the second angular range to the third angular range the first transfer function, the first derivative of the first transfer function and/or the second derivative of the first transfer function is/are constant.

5. The steering device according to any one of the preceding claims, **characterized in that**
a first first angular range extends from 0° up to a first positive angle limit, a first second angular range extends from the first positive angle limit up to a second positive angle limit and a first third angular range extends from the second positive angle limit up to a third positive angle limit and/or a second first angular range extends from 0° up to a first negative angle limit, a second second angular range extends from the first negative angle limit up to a second negative angle limit and a second third angular range extends from the second negative angle limit up to a third negative angle limit, wherein preferably the absolute values of the first positive angle limit and of the first negative angle limit, of the second positive angle limit and of the second negative angle limit and/or of the third positive angle limit and of the third negative angle limit are equal and/or the first positive angle limit is between 30° and 50°, more preferably between 35° and 45°, even more preferably between 39° and 41° and most preferably 40°, the second positive angle limit is between 65° and 85°, more preferably between 70° and 80°, even more preferably between 74° and 76° and most preferably 75°, and/or the third positive angle limit is 90°.

6. The steering device according to any one of the preceding claims, **characterized by** at least one second wheel (9), wherein the second wheel (9) is supported in such a way that the second wheel can be turned about at least one second steering axis (17) and can be rotated about at least a second axis of rotation (25) extending perpendicularly to the second steering axis (17), wherein preferably the first wheel (7) and the second wheel (9) are arranged on opposite sides with respect to a longitudinal axis (L) extending along a main direction of travel (F) of the vehicle (1), and/or preferably the transferring apparatus for transferring a motion of the steering element (5) to the second wheel (9) having at least one second first gear (41) which is mechanically operatively connected to the steering element (5) and having at least one noncircular arrangement of teeth, and at least one second second gear (33) which is mechanically operatively connected to the second wheel (9) and which comprises a noncircular arrangement of teeth complementary to the noncircular arrangement of teeth of the second first gear (41).

7. The steering device according to Claim 6, **characterized in that** a motion of the steering element (5) from the position corresponding to a straight-ahead travel of the vehicle (1) to the position corresponding to a cornering of the vehicle in the direction of the first angle ($\alpha$) leads to a turning of the second wheel (9) about the second steering axis (17) by a second second angle (ß) from a position of the second wheel corresponding to the straight-ahead travel of the vehicle (1), wherein in particular the first angle ($\alpha$) and the second second angle (ß) are linked to each other by means of at least one second transfer function, wherein the second transfer function for the first angular range constitutes a second trigonometric function, and constitutes a second polynomial of n-th degree, with $n \geq 2$, for the second angular range, and preferably additionally constitutes a second polynomial of first degree for the third angular range.

8. The steering device according to Claim 7, **characterized in that** in the transition from the first angular range to the second angular range and/or in the transition from the second angular range to the third angular range the second transfer function, the first derivative of the second transfer function and/or the second derivative of the second transfer function is/are constant, and/or **characterized in that** the functional value of the first transfer function and/or the first second angle ($\gamma$) for positive values of the first angle ($\alpha$) correspond(s) to the negative value of the functional value of the second transfer function and/or of the second second angle (ß) for negative values of the first angle ($\alpha$), and the functional value of the first transfer function and/or the first second angle ($\gamma$) for negative values of the first angle ($\alpha$) correspond(s) to the negative value of the functional value of the second transfer function and/or of the second second angle (ß) for positive values of the first angle ($\alpha$).

9. The steering device according to Claim 7 or 8, **characterized in that** the first transfer function for positive values of the first angle ($\alpha$) and the second transfer function for positive values of the first angle ($\alpha$) and/or the first transfer function for negative values of the first angle ($\alpha$) and the second transfer function for negative values of the first angle ($\alpha$) are matched to one another such that the first axis of rotation (23) and the second axis of rotation (25) always intersect at least in the first angular range at a point of intersection (S) which is located on a straight line (M) arranged in a fixed manner along the longitudinal axis (L) of the vehicle and extending perpendicularly to the longitudinal axis (L).

10. The steering device according to any one of the preceding claims, **characterized in that** the first wheel (7) and/or the second wheel (9) has/have at least one swivel castor, wherein the swivel castor preferably comprises at least one fork which can be turned about the respective first steering axle (15) and/or second steering axle (17), wherein in particular at least one castor and/or wheel which can be turned about the respective first and/or second axis of rotation is arranged in the fork.

11. The steering device according to any one of the preceding claims, **characterized in that** the first transfer function is determined by the outer contour and/or arrangement of teeth of the first first gear (39) and first second gear (31) and/or the second transfer function is determined by the outer contour and/or arrangement of teeth of the second first gear (41) and second second gear (33).

12. The steering device according to any one of the preceding claims, **characterized in that**

in order to implement the first and/or second transfer function the outer contour/arrangement of teeth of the first first gear (39), of the first second gear (31), of the second first gear (41) and/or of the second second gear (33) is/are adjusted to a reduction and/or transmission ratio of a first gear unit (51) and/or of a second gear unit (65), wherein in particular the transmission and/or reduction ratio of the first gear unit (51) and/or of the second gear unit (65) is/are compensated for by the outer contour/arrangement of teeth.

13. The steering device according to any one of the preceding claims, **characterized in that**
the first first gear (39), the first second gear (31), the second first gear (41) and/or the second second gear (33), comprise(s) involute toothing at least in certain sections.

14. A vehicle (1), in particular a transport cart, lifting cart, trailer, semi-trailer and/or pushcart, comprising at least one steering device (3) according to any one of the preceding claims.


**Revendications**

1. Dispositif de direction (3) pour un véhicule (1), en particulier un chariot de transport, comprenant au moins un organe de direction (5) et un dispositif de transmission (31, 39, 47, 51) pour transmettre un mouvement de changement de direction de l'organe de direction (5) à au moins une première roue (7), dans lequel la première roue (7) est supportée de manière que ladite première roue (7) peut tourner autour d'au moins un premier axe directionnel (15), et est supportée de manière rotative autour d'au moins un premier axe de rotation (23) s'étendant perpendiculairement par rapport au premier axe directionnel (15), et le dispositif de transmission a au moins une première première roue dentée (39) en liaison fonctionnelle mécanique avec l'organe de direction (5) et ayant au moins une denture non circulaire, au moins une première deuxième roue dentée (31) en liaison mécanique fonctionnelle avec la première roue (7), qui comprend une denture non circulaire complémentaire de la denture non circulaire de la première première roue dentée (39), de sorte qu'un déplacement de l'organe de direction (5) en dehors d'une position correspondant à un déplacement en ligne droite du véhicule (1) jusque dans une position correspondant à un déplacement en virage du véhicule (1) dans la direction d'un premier angle ($\alpha$), conduit à une rotation de la première roue (7) autour du premier axe directionnel (15) sur un premier deuxième angle ($\gamma$) à partir d'une position correspondant à le déplacement en ligne droite du véhicule (1) de la première roue (7), dans lequel
le premier angle ($\alpha$) et le premier deuxième angle ($\gamma$) sont liés l'un à l'autre via au moins une première fonction de transmission, et pour une première plage angulaire du premier angle ($\alpha$), la première fonction de transmission est une première fonction trigonométrique, **caractérisé en ce que**
la première fonction de transmission, pour une deuxième plage angulaire du premier angle ($\alpha$), est un premier polynôme de n$^{ième}$ degré, avec n $\geq 2$.

2. Dispositif de direction selon la revendication 1, **caractérisé en ce que** la première fonction de transmission pour une troisième plage angulaire du premier angle ($\alpha$) est un premier polynôme de premier degré.

3. Dispositif de direction selon la revendication 1 ou 2, **caractérisé en ce que** l'organe de direction comprend au moins un timon (5), au moins un volant et/ou au moins un actionneur, en particulier électrique, hydraulique et/ou pneumatique.

4. Dispositif de direction selon l'une quelconque des revendications précédentes, **caractérisé en ce que**
au cours de la transition depuis la première plage angulaire vers la deuxième plage angulaire et/ou dans la transition depuis la deuxième plage angulaire vers la troisième plage angulaire, la première fonction de transmission, la dérivée première de la première fonction de transmission et/ou la dérivée seconde de la première fonction de transmission sont continues.

5. Dispositif de direction selon l'une quelconque des revendications précédentes, **caractérisé en ce que**
une première première plage angulaire s'étend de 0° jusqu'à une première valeur de limite d'angle positive, une première deuxième plage angulaire s'étend de la première valeur de limite d'angle positive jusqu'à une deuxième valeur de limite d'angle positive, et une première troisième plage angulaire s'étend de la deuxième valeur de limite d'angle positive jusqu'à une troisième valeur de limite d'angle positive et/ou une deuxième première plage angulaire s'étend de 0° jusqu'à une première valeur de limite d'angle négative, une deuxième deuxième plage angulaire s'étend de la première valeur de limite d'angle négative jusqu'à une deuxième valeur de limite d'angle négative, et une deuxième troisième plage angulaire s'étend de la deuxième valeur de limite d'angle négative jusqu'à une troisième valeur de limite d'angle négative, dans lequel de préférence les valeurs absolues de la première valeur de limite d'angle positive et de la première valeur de limite d'angle négative, de la deuxième valeur de limite d'angle positive et de la deuxième valeur de limite d'angle négative et/ou de la troisième valeur de limite d'angle positive et de la troisième valeur de limite d'angle négative sont identiques, et/ou la première valeur de limite d'angle positive est entre 30° et 50°, de préférence entre 35° et 45°, de manière encore plus préférée entre 39° et 41°, et de la manière la plus préférée est de 40°, la deuxième valeur de limite d'angle positive est entre 65° et 85°, de préférence entre 70° et 80°, de manière plus préférée entre 74° et 76°, et de la manière la plus préférée est de 75°, et/ou la troisième valeur de limite d'angle positive est de 90°.

6. Dispositif de direction selon l'une quelconque des revendications précédentes, **caractérisé par** au moins une deuxième roue (9), dans lequel la deuxième roue (9) est supportée de manière que ladit deuxième roue (9) pouvant tourner autour d'au moins un deuxième axe directionnel (17), et est supportée de manière rotative autour d'au moins un deuxième axe de rotation (25) s'étendant perpendiculairement au deuxième axe directionnel (17), dans lequel de préférence la première roue (7) et la deuxième roue (9) sont disposées sur des côtés opposés d'un axe longitudinal (L) s'étendant le long d'une direction de déplacement principale (F) du véhicule (1), et/ou de préférence le dispositif de transmission pour transmettre un mouvement de l'organe de direction (5) à la deuxième roue (9) a au moins une deuxième première roue dentée (41) en liaison fonctionnelle mécanique avec l'organe de direction (5) et ayant au moins une denture non circulaire, et au moins une deuxième deuxième roue dentée (33) en liaison fonctionnelle mécanique avec la deuxième roue (9), qui comprend une denture non circulaire complémentaire de la denture non circulaire de la deuxième première roue dentée (41).

7. Dispositif de direction selon la revendication 6, **caractérisé en ce qu'**un déplacement de l'organe de direction (5) en dehors de la position correspondant à un déplacement en ligne droite du véhicule (1), jusque dans la position correspondant à un déplacement en virage du véhicule (1) dans la direction du premier angle ($\alpha$), conduit à une rotation de la deuxième roue (9) autour du deuxième axe directionnel (17) sur un deuxième deuxième angle ($\beta$) à partir d'une position correspondant à la déplacement en ligne droite du véhicule (1) de la deuxième roue, dans lequel en particulier

   le premier angle ($\alpha$) et le deuxième angle ($\beta$) sont liés l'un à l'autre via au moins une deuxième fonction de transmission, dans lequel pour la première plage angulaire, la deuxième fonction de transmission est une deuxième fonction trigonométrique, et pour la deuxième plage angulaire, est un deuxième polynôme de $n^{\text{ième}}$ degré, avec n $\geq$2, et en outre de préférence, pour la troisième plage angulaire, est un deuxième polynôme de premier degré.

8. Dispositif de direction selon la revendication 7, **caractérisé en ce qu'**au cours de la transition depuis la première plage angulaire vers la deuxième plage angulaire et/ou de la transition depuis la deuxième plage angulaire vers la troisième plage angulaire, la deuxième fonction de transmission, la dérivée première de la deuxième fonction de transmission et/ou la dérivée deuxième de la deuxième fonction de transmission sont continues, et/ou **caractérisé en ce que** la valeur de fonction de la première fonction de transmission et/ou le premier deuxième angle ($\gamma$) pour des valeurs positives du premier angle ($\alpha$) correspond à la valeur négative de la valeur de fonction de la deuxième fonction de transmission, et/ou du deuxième angle ($\beta$) pour des valeurs négatives du premier angle ($\alpha$), et la valeur de fonction de la première fonction de transmission et/ou du premier deuxième angle ($\gamma$) pour des valeurs négatives du premier angle ($\alpha$) correspond à la valeur négative de la valeur de fonction de la deuxième fonction de transmission et/ou du deuxième deuxième angle ($\text{ß}$) pour des valeurs positives du premier angle ($\alpha$).

9. Dispositif de direction selon la revendication 7 ou 8, **caractérisé en ce que** la première fonction de transmission pour des valeurs positives du premier angle ($\alpha$) et la deuxième fonction de transmission pour des valeurs positives du premier angle ($\alpha$), et/ou la première fonction de transmission pour des valeurs négatives de premier angle ($\alpha$) et la deuxième fonction de transmission pour des valeurs négatives du premier angle ($\alpha$) sont adaptées l'une à l'autre, de telle sorte que le premier axe de rotation (23) et le deuxième axe de rotation (25), au moins dans la première plage angulaire, se recoupent toujours en un point d'intersection (S) qui est agencé de manière statique sur une droite (M) agencée de long de l'axe longitudinal (L) du véhicule, et perpendiculairement à l'axe longitudinal (L).

10. Dispositif de direction selon l'une quelconque des revendications précédentes, **caractérisé en ce que** la première roue (7) et/ou la deuxième roue (9) a / ont au moins une roue directrice, dans lequel ladite roue directrice comprend de préférence au moins une fourche pouvant tourner autour du premier axe directionnel (15) et/ou deuxième axe directionnel (17) respectifs, dans lequel en particulier dans la fourche est agencée au moins une roulette et/ou roue pouvant tourner autour du premier et/ou deuxième axes de rotation respectifs.

11. Dispositif de direction selon l'une quelconque des revendications précédentes, **caractérisé en ce que** la première fonction de transmission est définie par le contour extérieur et/ou la denture de la première première roue dentée (39) et de la première deuxième roue dentée (31), et/ou la deuxième fonction de transmission est définie par le contour extérieur et/ou la denture de la deuxième première roue dentée (41) et de la deuxième deuxième roue dentée (33).

12. Dispositif de direction selon l'une quelconque des revendications précédentes, **caractérisé en ce que** pour la mise en oeuvre de la première et/ou deuxième fonction de transmission, le contour extérieur/la denture de la première première roue dentée (39), de la première deuxième roue dentée (31), de la deuxième première roue dentée (41) et/ou de la deuxième deuxième roue dentée (33), sont ajustés à un rapport de transmission de réduction et/ou à un rapport de transmission de démultiplication d'un premier dispositif de transmission (51) et/ou d'un deuxième dispositif de transmission (65), dans lequel de préférence le rapport de transmission de réduction et/ou le rapport de transmission de démultiplication du premier dispositif de transmission (51) et/ou du deuxième dispositif de transmission (65) est compensé par le contour extérieur/la denture.

13. Dispositif de direction selon l'une quelconque des revendications précédentes, **caractérisé en ce que** la première première roue dentée (39), la première deuxième roue dentée (31), la deuxième première roue dentée (41) et/ou la deuxième deuxième roue dentée (33) a/ont au moins par endroits une denture en développante.

14. Véhicule (1), en particulier chariot de transport, chariot élévateur, remorque, semi-trailer et/ou chariot à bagages, comprenant au moins un dispositif de direction (3) selon l'une quelconque des revendications précédentes.

Fig. 1a

Fig. 1b

Fig. 2a

Fig. 2b

Fig. 3a

Fig. 3b

Fig. 4

Fig. 5

| erster Winkel Ein-Schlag Winkel [°] | Betrag Dreh-Winkel Getriebe zahnrad 55,69 [°] | Spurwinkel | | Übersetzung | | Radien | | | |
|---|---|---|---|---|---|---|---|---|---|
| | | Zweites Rad [°] | erstes Rad [°] | Zahn-räder 41-33 | Zahn-räder 39-31 | Zahn-rad 41 | Zahn-rad 33 | Zahn-rad 39 | Zahn-rad 31 |
| 0 | 0,00 | 0,00 | 0,00 | 1,5000 | 1,5000 | 120,00 | 80,00 | 120,00 | 80,00 |
| 5 | 3,33 | 5,15 | 4,86 | 1,5910 | 1,4166 | 122,81 | 77,19 | 117,24 | 82,76 |
| 10 | 6,67 | 10,61 | 9,45 | 1,6891 | 1,3409 | 125,63 | 74,37 | 114,56 | 85,44 |
| 15 | 10,00 | 16,42 | 13,81 | 1,7931 | 1,2728 | 128,39 | 71,61 | 112,00 | 88,00 |
| 20 | 13,33 | 22,57 | 17,95 | 1,9014 | 1,2119 | 131,07 | 68,93 | 109,58 | 90,42 |
| 25 | 16,67 | 29,09 | 21,89 | 2,0112 | 1,1580 | 133,58 | 66,42 | 107,32 | 92,68 |
| 30 | 20,00 | 35,98 | 25,67 | 2,1191 | 1,1106 | 135,88 | 64,12 | 105,24 | 94,76 |
| 35 | 23,33 | 43,21 | 29,30 | 2,2205 | 1,0692 | 137,90 | 62,10 | 103,34 | 96,66 |
| 40 | 26,67 | 50,77 | 32,81 | 2,3102 | 1,0335 | 139,58 | 60,42 | 101,65 | 98,35 |
| 45 | 30,00 | 58,39 | 36,28 | 2,2040 | 1,0700 | 137,58 | 62,42 | 103,38 | 96,62 |
| 50 | 33,33 | 65,20 | 40,06 | 1,8602 | 1,2158 | 130,07 | 69,93 | 109,74 | 90,26 |
| 55 | 36,67 | 70,71 | 44,45 | 1,4480 | 1,4274 | 118,30 | 81,70 | 117,61 | 82,39 |
| 60 | 40,00 | 74,91 | 49,60 | 1,0852 | 1,6625 | 104,09 | 95,91 | 124,88 | 75,12 |
| 65 | 43,33 | 78,08 | 55,52 | 0,8382 | 1,8796 | 91,20 | 108,80 | 130,55 | 69,45 |
| 70 | 46,67 | 80,65 | 62,07 | 0,7220 | 2,0385 | 83,86 | 116,14 | 134,18 | 65,82 |
| 75 | 50,00 | 83,00 | 69,00 | 0,7000 | 2,1000 | 82,35 | 117,65 | 135,48 | 64,52 |
| 80 | 53,33 | 85,33 | 76,00 | 0,7000 | 2,1000 | 82,35 | 117,65 | 135,48 | 64,52 |
| 85 | 56,67 | 87,67 | 83,00 | 0,7000 | 2,1000 | 82,35 | 117,65 | 135,48 | 64,52 |
| 90 | 60,00 | 90,00 | 90,00 | 0,7000 | 2,1000 | 82,35 | 117,65 | 135,48 | 64,52 |

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2384950 A2
- EP 0794104 A2
- DE 19748474 C1
- US 20090241708 A1